# EUROPEAN PATENT SPECIFICATION

(11) **EP 1 334 988 B1**
(45) Date of publication and mention of the grant of the patent: **26.12.2007**
(21) Application number: 01978815.7
(22) Date of filing: 17.10.2001
(51) Int. Cl.: C08G 18/08, C08G 18/46, C08G 18/40, C09D 175/06

(54) **ULTRAVIOLET-ABSORBING RESIN, AQUEOUS RESIN EMULSION, RESIN COMPOSITION, AQUEOUS RESIN EMULSION COMPOSITION AND ITS USE, AND AQUEOUS POLYURETHANE EMULSION**
UV-ABSORBIERENDES HARZ, WÄSSRIGE HARZEMULSION, HARZZUSAMMENSETZUNG, WÄSSRIGE HARZEMULSIONSZUSAMMENSETZUNG UND DEREN VERWENDUNG SOWIE WÄSSRIGE POLYURETHANEMULSION
RESINE ABSORBANT L'ULTRAVIOLET, EMULSION AQUEUSE DE RESINE, COMPOSITION DE RESINE, COMPOSITION D'EMULSION AQUEUSE DE RESINE ET UTILISATION DE CELLE-CI, AINSI QU'EMULSION AQUEUSE DE POLYURETHANNE

(30) Priority: 17.10.2000 JP 2000317216; 14.11.2000 JP 2000346496; 14.11.2000 JP 2000346500; 14.11.2000 JP 2000346501; 28.06.2001 JP 2001196432
(43) Date of publication of application: 13.08.2003
(73) Proprietor: DAICEL CHEMICAL INDUSTRIES, LTD., Sakai-shi, Osaka 590-0905 (JP)
(72) Inventor: INOKAMI, Kiyotaka, Takasago-shi, Hyogo 671-0122 (JP); ENDO, Toshio, Ohtake-shi, Hiroshima 739-0651 (JP); FUJII, Tatsumi, Ohtake-shi, Hiroshima 739-0651 (JP)
(74) Representative: Portal, Gérard
(86) International application number: PCT/JP2001/009099
(87) International publication number: WO 2002/032981

(56) References cited:
- EP-A- 0 989 124
- EP-A- 1 104 790
- EP-A1- 1 114 839
- JP-A- 6 093 068
- JP-A- 6 100 674
- JP-A- 2000 053 754
- JP-A- 2000 095 849
- JP-A- 2000 103 959
- US-A- 6 037 393

## Description

The invention relates to ultraviolet-absorbing resins, aqueous ultraviolet-absorbing resin emulsions Obtainable from said ultraviolet-absorbing resins, to resin compositions and resin emulsion compositions, containing said resins and emulsions and to their uses.

More precisely, the present invention relates to different aspects, hereinafter designated by aspects I to VII:
- aspects I to IV relate to an ultraviolet absorbing resin, an aqueous emulsion of the resin, a resin composition of the resin and other resin, and an aqueous resin emulsion composition. Resins obtained from those resin compositions or aqueous resin emulsion compositions have excellent light resistance, water resistance and/or resistance to chemicals.
- aspect V relates to a resin composition and an aqueous resin emulsion composition for use in coating artificial leather.
- aspect VI relates to a resin composition and an aqueous resin emulsion composition for use in coating plastics.
- aspect VII relates to a resin composition and an aqueous resin emulsion composition for use In coating woody materials.

In recent years, synthetic resins are aqueously emulsified so that the synthetic resins are used in various industrial fields such as automobiles, electric and electronic industries, and constructions, while taking the environment into consideration. Resins or coating films, obtained using those aqueous resin emulsions have disadvantages in that when those are exposed to light containing ultraviolet rays such as sunlight, those undergo deterioration or discoloration due to the ultraviolet rays, or cause decrease in molecular weight, resulting in decrease in strength thereof.

In order to improve the durability (light resistance) of a resin coating film or the like obtained from an aqueous resin emulsion, an ultraviolet absorber is generally added to the emulsion. Examples of such conventional ultraviolet absorbers include benzotriazoles such as 2-(2'-hydroxy-5'-methylphenyl)benzotiazole or 5-chloro-2-(2'-hydroxy-3',-5'-di-tert-butylphenyl)benzotriazol e, and benzophenones such as 2,4-dihydroxybenzophenone or 2-hydroxy-4-octyloxybenzo-phenone.

However, those conventional ultraviolet absorbers are low boiling compounds having low molecular weights. Therefore, if those compounds are added to a resin for aqueous emulsion, various disadvantages arise. For example, if the ultraviolet absorber is added in large amount to a resin, phase separation occurs, and this makes transparency or mechanical strength of the resin decrease. For this reason, the amount of the ultraviolet absorber to be added is reduced as much as possible. In such a case, however, light resistance of the resin is not improved to a satisfactory level. Further, the ultraviolet absorber volatilizes, thermally decomposes or bleeds (bleedout) on a coating film surface when coating the aqueous resin emulsion or forming a film. Therefore, it is impossible to impart a long-term stable light resistance to the resin.

To overcome the above-mentioned disadvantages, an attempt has been made to impart a group having polymerizable double bond, such as a vinyl group, to the ultraviolet absorber and polymerizing the same to increase its molecular weight, thereby improving compatibility with a resin or preventing the ultraviolet absorber from volatilization, thermal decomposition, bleedout or the like (JP-A-60038411, JP-A-62181360, JP-A-03281685, and the like).

However, those ultraviolet-absorbing polymers also have the following disadvantages, and improvement is still required to the same. Namely, those ultraviolet-absorbing polymers do not have hydrophilicity, and therefore cannot stably and uniformly be mixed when compounding with a resin for aqueous emulsion. Further, compatibility is insufficient depending on the kind of the resin for aqueous emulsion, and such an insufficient compatibility decreases mechanical strength of the resin. This tendency is considerable in the case where a resin for aqueous emulsion is a thermoplastic resin, particularly polyolefins or polyvinylidene chloride. Further, it is not still satisfactory in terms of long-term light resistance of the resin.

Furthermore, aqueous emulsions of polyvinylidene chloride, aqueous emulsions of polyesters, aqueous emulsions of polyurethane resins, and the like are widely used as various coating materials or binding materials, because the resulting resins have extremely high mechanical strength. However, polyvinylidene chloride, polycarbonates, polyesters and polyurethane resins undergo decomposition by an alkali component, and as a result, its mechanical strength decreases. Thus, improvement in resistance to chemicals, such as alkali resistance or solvent resistance, have been demanded to those resins.

On the other hand, the representative methods of forming nonionic aqueous emulsion of a synthetic resin such as the above highly-polymerized ultraviolet absorber include a method of reacting a compound having nonionic surface active group and at least two hydroxyl groups, such as polyethylene glycol, other polyol and polyisocyanate as essential materials, and a method of reacting polyol and polyisocyanate as essential components in an organic solvent such as methyl ethyl ketone, and then, adding a nonionic emulsifier such as polyoxyethylene nonylphenyl ether to emulsify and disperse it in water.

However, in this conventional technique, considering, for example, introduction of a function-imparting group for achieving high function, compounds that can be used are limited to compounds having at least two hydroxyl groups, besides a compound having a nonionic surface active group and at least two hydroxyl groups, such as polyethylene glycol, other polyol and polyisocyanate. Further, the nonionic surface active group is present in or in the vicinity of a main chain of polyurethane skeleton, and as a result, water dispersiblity is low, with the result that a large number of nonionic surface active groups are necessary in order to obtain a stable aqueous dispersion. As a result, water resistance may decrease when a film is formed. Further, if the nonionic emulsifier is used, the emulsifier elutes when a film is formed, resulting in deterioration of water resistance.

A coating agent for artificial leather is getting to change from a solvent type urethane resin to an aqueous urethane resin. Originally, urethane resin itself does not have good light resistance, and ultraviolet absorber or the like has been added to the urethane resin to improve its light resistance. However, it is known that when ultraviolet absorber which can be used for an aqueous urethane resin is added, since the proportion of hydrophilic groups contained in the ultraviolet absorber is large, the light resistance of artificial leather considerably decreases after water resistance test.

The utilization of coated plastic products to various fields is increasingly expanding, and requirements to performance tend to be high and diversify. Of the performances required in coated plastic products, durability (adhesion and light resistance) is an important element as commercial products.

As a coating agent for use in coated plastics, solvent type urethane resins or solvent type acrylic resins are used from the standpoint of their adhesive properties, and aqueous urethane resins or aqueous acrylic resins are used from the environmental standpoint. Further, the above-mentioned benzotriazole ultraviolet absorber is used for the purpose of improving light resistance of those resins, but the use thereof involves the above-mentioned problems.

Woody materials are also used in various fields such as flooring materials, wall materials or furniture. Of those, woody materials used outdoors or in the places, which are exposed to sunlight have the problems in that yellowing occurs on the surface thereon due to ultraviolet rays with the passage of time, resulting in discoloration. Therefore, various coatings are applied to protect woody materials, but there is no coating film which is practically durable. Further, for the purpose of improving light resistance of a coating agent and preventing the surface of woody materials from yellowing due to the ultraviolet rays, the above-mentioned benzotriazole ultraviolet absorber is used, but such still has the above-mentioned problems.

### [Background Art relating to aspect III]

In the conventional aqueous polyurethane emulsions, polyether diols, polyester diols and polycarbonate diols are widely used as the raw materials thereof. However, when flexibility, light resistance, hydrolysis resistance and heat resistance of a film obtained from the aqueous polyurethane emulsions are evaluated, a film obtained from the aqueous polyurethane emulsion using polyether polyol has problems of light resistance and heat resistance, a film obtained from the aqueous polyurethane emulsion using polyester polyol has a problem of hydrolysis resistance, and a film obtained from the aqueous polyurethane emulsion using polycarbonate polyol has a problem of flexibility. Thus, an aqueous polyurethane emulsion for polyurethane artificial leather, satisfying all of flexibility, light resistance, hydrolysis resistance and heat resistance, has not yet been obtained.

Accordingly, objects of the present invention are as follows.

The objects of the aspects I to IV are to provide an ultraviolet-absorbing resin, an aqueous emulsion of the ultraviolet-absorbing resin (hereinafter referred to as "aqueous ultraviolet-absorbing resin emulsion"), a resin composition of the ultraviolet-absorbing resin and other resin, and an aqueous resin emulsion composition containing the ultraviolet-absorbing resin and other resin.

In those cases, the ultraviolet-absorbing resin has excellent compatibility with other resin and imparts excellent light resistance to the other resin without impairing favorable properties of the other resin. Also, the aqueous ultraviolet-absorbing resin emulsion has high compounding stability to an aqueous emulsion of the other resin (hereinafter referred to as "other aqueous resin emulsion"), and bleedout of the ultraviolet-absorbing resin on the surface of a coating film obtained or the like is little, with the result that stable light resistance is imparted to other resin over a long period of time. Further, even in the case where other resin having poor alkali resistance, solvent resistance, etc. is used, excellent resistance to chemicals can be imparted to a coating film obtained or the like.

The object of aspect V is to provide an aqueous resin composition for coating artificial leather, containing an ultraviolet absorber having excellent ultraviolet-absorbing property, water resistance, and compatibility with a resin.

The object of aspect VI is to provide a resin composition for coating plastics, having excellent compatibility with a base resin, and bleedout resistance with the passage of time, and also having excellent adhesive properties to plastics, and light resistance.

The object of aspect VII is to provide a resin composition for coating woody materials, having excellent compatibility with a base resin and bleedout resistance with the passage of time, and also hardly causing any yellowing of the woody materials by ultraviolet rays.

As a result of extensive investigations to attain the objects of aspects I to VII, the inventors of the present invention have found that an ultraviolet-absorbing resin obtained by using polyester polyol having a specific ultraviolet-absorbing group as a raw material has excellent compatibility with a large variety of other resins, and can impart excellent light resistance without impairing favorable properties of the other resin; emulsification of the ultraviolet-absorbing resin in water makes it possible to improve compounding stability thereof with the other aqueous resin emulsion; and a coating film etc. obtained using the same can prevent bleedout, of the ultraviolet absorber on a resin surface, thereby imparting a long-term stable light resistance to a synthetic resin.

They have also found that the ultraviolet-abeorbing resin can impart excellent alkali resistance and solvent resistance to other resin having poor alkali resistance and solvent resistance.

Further, they have found that when the ultraviolet-absorbing resin is used for coating artificial leathers, plastics, woody materials or the like, the above properties can be imparted thereto.

The aspects I to VII of the invention have been completed based on those findings.

According to a first essential feature, corresponding to the first aspect of the present invention, the invention relates to an ultraviolet-absorbing resin (i) obtainable by reacting :
- a polyester polyol (A) having an ultraviolet-absorbing group, represented by the following formula: 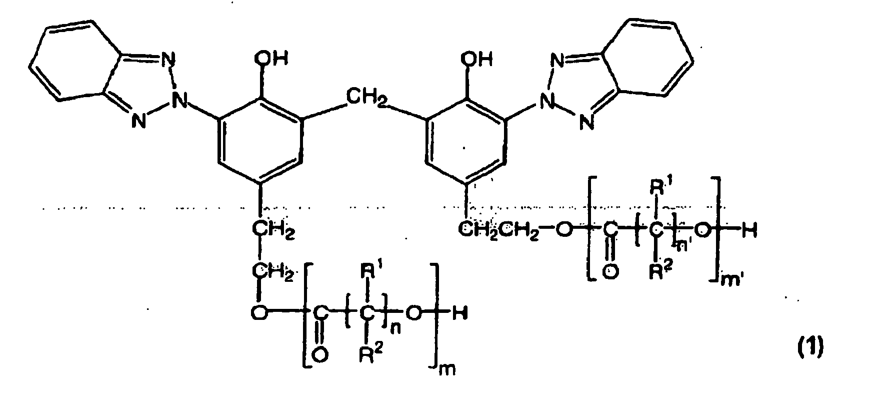 in which
   R¹ and R² each represent a hydrogen atom or an alkyl group having 1 to 10 carbon atoms,
   n and n' each are an integer of 4 to 8,
   m and m' each are an integer of 1 to 20,
   R¹ and R² each are the same or different,
   n and n' structural units are the same or different, and
   m and m' structural units are the same or different);
- a compound (C) containing an ionic and/or nonionic surface active group, said compound (C) being at least one member selected from the group consisting of the following macromonomers (C3) and (C4) :
   a macromonomer (C3) having a tertiary and/or quaternary nitrogen atom at a side chain and having at least two hydroxyl groups at the terminals, and
   a macromonomer (C4) obtainable by radically polymerizing radical polymerizable unsaturated monomers containing a nonionic surface active group in the presence of a mercaptan chain transfer agent having two or more hydroxyl groups and one mercapto group and
- an organic polyisocyanate (D).

The invention also relates to an aqueous ultraviolet-absorbing resin emulsion corresponding to aspect II of the present invention.

Said aqueous ultraviolet-absorbing resin emulsion (ie) is obtainable by neutralizing a solution of an organic solvent (s) containing the ultraviolet-absorbing resin (i) of the first aspect of the invention, and then dispersing the same in water.

In accordance with aspect III of the invention, the invention relates to a resin composition comprising the ultraviolet- absorbing resin (i) of the first aspect and an other resin (ii).

In accordance with aspect IV of the invention, the invention relates to an aqueous resin emulsion composition comprising at least one member selected from the group consisting of an ultraviolet-absorbing resin (i), as defined in the first aspect, and an aqueous ultraviolet -absorbing resin emulsion (ie) as defined in the second aspect, and an aqueous emulsion (iie) of an other resin (ii).

In accordance with aspects V, VI and VII, the invention also relates to the use of the resin compositions and of the aqueous resin emulsion compositions defined above, for coating artificial leather, plastics or woody material.

The aspects I to VII are described in detail:

### (i) Ultraviolet-absorbing resin

The ultraviolet-absorbing resin (i) of the present invention is a resin obtained by using, for example, polyester polyol (A) represented by the above formula (1).

The ultraviolet-absorbing resin (i) is preferably obtained by reacting (A) polyester polyol having an ultraviolet-absorbing group, (C) a compound containing an ionic and/or nonionic surface active group, (D) an organic polyisocyanate, and optionally (B) polyol, in an organic solvent (s) if necessary.

Structural proportion of the polyester polyol (A) contained in the ultraviolet-absorbing resin (i) is preferably 10 to 60% by, particularly preferably 25 to 50% by weight.

The ultraviolet-absorbing resin (i) is preferably an aqueous urethane resin (i.e., urethane resin capable of forming an aqueous urethane resin (i.e., urethane resin capable of forming an aqueous emulsion).

### (A) Polyester polyol having an ultraviolet-absorbing group

Polyester polyol having an ultraviolet-absorbing group (A) used in the present invention (hereinafter sometimes referred to as "component (A)" for simplicity) means polyester polyol having a molecular structure possessing ultraviolet-absorbing properties (for example, heterocyclic ring group such as benzotriazole) in the molecule. Of the polyester polyol (A), a compound represented by the formula (1) is preferable, and UVA101, UVA103 and UVA105 (products of Daicel Chemical Industry Co.), and the like are commercially available.

Component (A) can be used as a polyester type ultraviolet absorber having excellent ultraviolet-absorbing properties, compatibility with a resin, bleedout resistance with the passage of time, water resistance, and the like.

In the formula (1), R¹ and R² each represent H or an alkyl group having 1 to 10 carbon atoms, n and n' each are an integer of 4 to 8, m and m' each are an integer of 1 to 20, n R¹, n R², n' R¹ and n' R² each may be the same or different, and m and m' structural units each may be the same or different. The number of the structural units is not particularly limited to use so long as m and m' are within the above ranges. The sum of m and m' is preferably 1 to 15.

The production method of the compound represented by the formula (1) and properties thereof are described in JP-A-10265557.

In the case, for example, where one kind of lactone is used (in the case of n=n'), the compound is obtained by ring-opening addition polymerization of lactones represented by the following formula (3) to an alcohol represented by the following formula (2) . 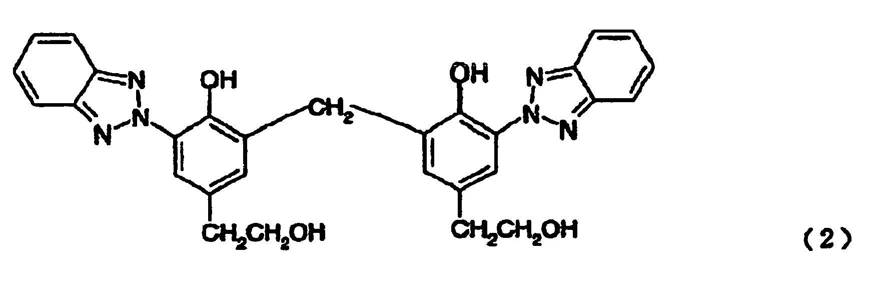 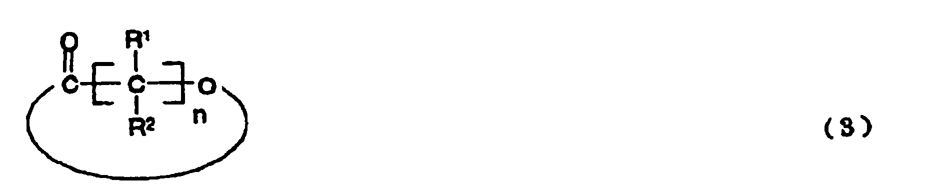 (R¹ and R² each represent a hydrogen atom or an alkyl group having 1 to 10 carbon atoms, and n is an integer of 4 to 8. nR¹ and nR² each may be the same or different.)

The alcohol represented by the above formula (2) is 1,1-bis[3-(2H-benzotriazol-2-yl)-4-hydroxybenzene ethanol] methane, and synthesized products or commercially available products can be used.

Examples of the lactones represented by the above-mentioned formula (3) include E-caprolactone, trimethyl-ε-caprolactone, monomethyl-ε-caprolactone. γ-butyrolactone and δ-valerolactone. Of those, ε-caprolactone is preferable.

### Polyol (B)

Examples of the polyol (B) optionally used in the present invention (hereinafter sometimes referred to as "component (B)") include a polyester polyol, a polyether polyol, a polycarbonate polyol, a poly(meth)acrylic polyol, a polyalkyl polyol, a polyalkylene polyol, and the like. Those can be used alone or as a mixture of two or more thereof. Component (B) is preferably used.

The polyol (B) can be a diol or a triol, and is preferably diol.

The polyol (B) has a number-average molecular weight of 500 to 10,000, preferably 500 to 5,000.

The polyol (B) includes the diol (gl), other diol compounds, polyester diol (VIIIA), and the like, according to the invention VIII.

The component (B) is added in an amount of 0 to 200 parts by weight, preferably 0 to 100 parts by weight based on 100 parts by weight of the component (A).

### (C) Compound containing an ionic and/or nonionic surface active group

Examples of the compound (C) containing an ionic and/or nonionic surface active group include compounds (C1) containing a carboxyl group and an active hydrogen group, aryl or alkyl dialkanolamine compounds (C2), macromonomers (C3) having tertiary and/or quaternary nitrogen atoms in the side chain and at least two hydroxyl groups at the terminal, and the like obtained by radically polymerizing radically polymerizable unsaturated monomers containing a nonionic surface active group in the presence of mercaptan chain transfer agent containing at least two hydroxyl groups and one mercapto group. Of the macromonomers (C3) and macromonomers (C4), the macromonomers (C3) are preferably used.

Examples of the compound containing a carboxyl group and an active hydrogen group (C1) include dialkylol(C₁-C₅) monoalkyl (C₁-C₅) carboxylic acids such as dimethylolpropionic acid or dimethylolbutanoic acid; reaction products between polyamine and acid anhydride; and lactone adducts in which dimethylolpropionic acid or dimethylolbutanoic acid is used as an initiator. The compound (C1) is added in an amount of 1 to 15 parts by weight, preferably 3 to 10 parts by weight, per 100 parts by weight of the component (A).

Examples of the aryl or alkyl dialkanolamine compounds (C2) include alkyl (C₁-C₁₀) dialkanol(C₁-C₅)amine compounds such as N-methyl diethanolamine or N-ethyl diethanolamine; aryl(C₁-C₁₀) dialkanol(C₁-C₅)amine compounds such as aryl N-phenyldiethanolamine; and lactone adducts using those aryl or alkyl dialkanolamine compounds as an initiator. The compound (C2) is added in an amount of 4 to 25 parts by weight, preferably 8 to 15 parts by weight, per 100 parts of the component (A).

Examples of macromonomers having tertiary and/or quaternary nitrogen atoms in the side chain and at least two hydroxyl groups at the terminal (C3) include macromonomers obtained by radically polymerizing di- or monoalkyl(C₂-C₄)aminoalkyl(C₁-C₆) (meth)acrylate such as dimethylaminoethyl methacrylate, and radically polymerizable unsaturated monomer (see item of macromonomer (C4)) added if necessary, in the presence of a mercaptan chain transfer agent such as 3-mercapto-1,2-propanediol (see item of macromonomer (C4)) in an organic solvent such as methyl ethyl ketone, using a radical polymerization agent (see item of macromonomer (C4)).

The macromonomers (C3) are added in an amount of 10 to 45 parts by weight, preferably 10 to 25 parts by weight, per 100 parts by weight of the component (A).

The macromonomers (C4) are obtained by radically polymerizing radically polymerizable unsaturated monomers containing a nonionic surface active group in the presence of a mercaptan chain transfer agent containing at least two hydroxyl groups and one mercapto group.

Examples of the mercaptan chain transfer agent containing at least two hydroxyl groups and one mercapto group include 1-mercapto-1,1-methanediol, 1-mercapto-1,1-ethanediol, 3-mercapto-1,2-propanediol, 2-mercapto-1,2-propanediol, 2-mercapto-2-methyl-1,3-propanediol, 2-mercapto-2-ethyl-1,3-propanediol, 1-mercapto-2,2-propanediol, 2-mercaptoethyl-2-methyl-1,3-propanediol and 2-mercaptoethyl-2-ethyl-1,3-propanediol.

Examples of the radically polymerizable unsaturated monomers containing a nonionic surface active group include alkoxyl-terminated polyethylene glycol mono(meth)acrylate, alkoxyl-terminated polytetramethylene glycol mono(meth)acrylate, and the like. Those radically polymerizable unsaturated monomers containing a nonionic surface active forming group can be used alone or as a mixture of two or more thereof.

In some cases, the radically polymerizable unsaturated monomers containing a nonionic surface active group can be copolymerized with the following monomers. Examples of those include alkyl(meth)acrylates such as methyl(meth)acrylate, ethyl (meth) acrylate, butyl (meth) acrylate or octyl(meth)acrylate; glycidyl group-containing monomers such as (meth)acrylonitrile, styrenes, vinyl acetate, glycidyl (meth)acrylate or aryl glycidyl ether; perfluoroalkyl group-containing monomers such as perflorooctylethyl(meth)acrylate or N-methyl(propyl)perfluorooctyl-sulfoneamidoethyl(meth)acrylate ; and polydimethylsiloxane group-containing monomers such as polydimethylsiloxypropyl(meth)acrylate.

Conventional methods can be applied to the production method of the macromonomer (C4). For example, nonionic surface active group-containing radically polymerizable unsaturated monomers as the essential components, and optionally other radically polymerizable unsaturated monomers, are radically polymerized in the presence of a mercaptan chain transfer agent having at least two hydroxyl groups and one mercapto group, if necessary using a polymerization initiator, to obtain the nonionic surface active group-containing macromonomer (C4) . Examples of the polymerization initiator include peroxide compounds such as benzoyl peroxide and azo compounds such as azobisisobutyronitrile.

The component (A) is used in an amount of generally 10 to 9, 000 parts by weight, preferably 25 to 8,000 parts by weight based on 100 parts by weight of the macromonomer (C4) . If the amount is less than 10 parts by weight, light resistance may not be obtained, and on the other hand, if it exceeds 9,000 parts by weight, dispersion stability of the emulsion may decrease.

The component (B) is added in an amount of generally 0 to 10, 000 parts by weight, preferably 0 to 1,000 parts by weight based on 100 parts by weight of the macromonomer (C4).

The macromonomer (C4) used to obtain the aqueous ultraviolet-absorbing resin emulsion of the present invention must be used in an amount that is sufficient to obtain a stable aqueous dispersion. More specifically, the macromonomer (C4) is used in an amount of at least 1 part by weight, preferably 2 to 50 parts by weight based on 100 parts by weight of a solid content of polyurethane (i.e.. ultraviolet-absorbing resin (i)). If the content of the macromonomer (C4) used is less than 1 part by weight, emulsion may be instable, resulting in precipitation of the macromonomer (C4).

### (D) Organic polyisocyanate

Examples of the organic polyisocyanate (D) (hereinafter sometimes referred to as "component (D)") used in the present invention include aromatic diisocyanates such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, diphenyldimethylmethane diisocyanate, dibenzyl diisocyanate, naphthylene diisocyanate, phenylene diisocyanate, xylylene diisocyanate or tetramethylxylylene diisocyanate; aliphatic diisocyanates such as tetramethylene diisocyanate, hexamethylene diisocyanate, lysine diisocyanate, 2-methylpentane-1,5-diisocyanate, 3-methylpentane-1,5-diisocyanate or 2,2,4-trimethylhexamethylene-1,6-diisocyanate; and alicyclic diisocyanates such as isophorone diisocyanate, cyclohexane diisocyanate, hydrogenated xylylene diisocyanate, hydrogenated diphenylmethane diisocyanate or hydrogenated trimethylxylylene diisocyanate. Those organic polyisocyanates are used alone or as a mixture of two or more thereof. Further, modified products such as adduct modified products, carbodiimide modified products, allophanate modified products, biuretmodifiedproducts, urethodion modified products or urethoimine modified products or isocyanurate modified products of the above organic polyisocyanates can also be used. Of those polyisocyanates, hexamethylene diisocyanate, isophorone diisocyanate, hydrogenated xylylene diisocyanate and hydrogenated diphenylmethane diisocyanate are preferably used, while considering the light resistance.

The component (D) is used in an amount of 15 to 50 parts by weight, preferably 25 to 40 parts by weight based on 100 parts by weight of the component (A).

In the case where the macromonomer (C4) is used, the amount of the polyisocynate (D) used is generally 20 to 250 parts by weight, preferably 50 to 200 parts by weight based on 100 parts by weight of the macromonomer (C4). If the amount of the polyisocynate (D) used is less than 20 parts by weight, molecular weight thereof becomes low, and dispersion stability of the emulsion may deteriorate. On the other hand, if it exceeds 250 parts by weight, a large amount of unreacted isocyanate remains, and dispersion stability of the emulsion may deteriorate.

An urethanization reaction of the polyester polyol (A) having an ultraviolet-absorbing group, the polyol (B), or the compound (C) containing an ionic and/or nonionic surface active groups with the organic polyisocyanate (D) is conducted, for example, at a reaction temperature of 20 to 120°C for 2 to 16 hours, if necessary in an organic solvent (s).

### (s) Organic solvent

Examples of the organic solvent (s) include aromatic hydrocarbons such as benzene, toluene or xylene; aliphatic hydrocarbons such as pentane, hexane or heptane, alicyclic hydrocarbons such as cyclohexane; esters such as ethyl acetate or n-butyl acetate; ketones such as acetone, methyl ethyl ketone or methyl isobutyl ketone; ethers such as diethyl ether, dioxane or tetrahydrofuran; dimethylformamide; and dimethylsulfoxide. Those organic solvents may be used alone or as a mixture of two or more thereof.

The ultraviolet-absorbing resin (i) can be used in the form of an emulsion. In order to impart water dispersibility to the ultraviolet-absorbing resin, the compound (C) containing the above-mentioned ionic and/or nonionic groups as a hydrophilic group is introduced into the molecule of the ultraviolet-absorbing resin. If necessary, anionic polar groups such as carboxylic acid salt, sulfonic acid salt, phosphoric acid salt or phosphonic acid salt, cationic polar groups other than quaternary ammonium salt, or nonionic polar groups such as ether groups may be introduced.

### (ie) Aqueous ultraviolet-absorbing resin emulsion

The aqueous ultraviolet-absorbing resin emulsion (ie) according to the present invention is obtained by, if necessary, neutralizing a solution of the ultraviolet-absorbing resin (i) in the organic solvent (s) withaneutralizingagent (E) , and if necessary, dispersing the same in water by the action of an emulsifier such as dodecylbenzenesulfonic acid or polyoxyethylenenonylphenyl ether. As an emulsifying method, the conventional methods may be used.

After the formation of the emulsion, the organic solvent can be removed by, for example, evaporator or vacuum distillation, thereby obtaining an organic solvent-free aqueous emulsion.

The aqueous ultraviolet-absorbing resin emulsion (ie) can be used in a solid content concentration of 5 to 60% by weight.

The aqueous ultraviolet-absorbing resin emulsion (ie) canalso be dried to obtain an ultraviolet-absorbing resin.

### (E) Neutralizing agent

Examples of the neutralizing agent (E) to an acid group in the ionic surface active group include organic amines such as ammonia, ethylamine, trimethylamine, triethylamine, triisopropylamine, tributylamine, triethanolamine, N-methyldiethanolamine, N-phenyl diethanol amine, monoethanol amine, dimethylethanol amine, diethylethanol amine, morpholine, N-methyl morphorine or 2-amino-2-ethyl-1-propanol; alkali metals such as lithium, potassium or sodium; and inorganic alkalis such as sodium hydroxide or potassium hydroxide. To improve weather resistance or water resistance thereof after drying, highly volatile compounds, in which formed salts are easily dissociated by heating, are preferable. Of those, ammonia, trimethylamine and triethylamine are more preferable. Those neutralizing agents can be used alone or as a mixture of two or more thereof.

Examples of the neutralizing agent (E) to a base in the ionic surface active group include inorganic acids such as hydrochloric acid, sulfuric acid or nitric acid; organic acids such as formic acid, acetic acid, propionic acid or butyric acid; and quaternizing agents such as methyl chloride, methyl bromide, dimethyl sulfate, diethyl sulfate, benzyl chloride, p-nitrobenzyl chloride, benzyl bromide, ethylene chlorohydrin, ethylene bromohydrin, epichlorohydrin or bromobutane. Those neutralizing agents can be used alone or as a mixture of two or more thereof.

The neutralizing agent (E) is not required for the nonionic surface active group.

### (ii) Other resin and (iie) the aqueous emulsion of other resin

The resin composition according to the present invention comprises the ultraviolet-absorbing resin (i) and other resin (ii).

Further, the aqueous resin emulsion composition according to the present invention comprises ah aqueous resin emulsion composition comprising :
- at least one member selected from the group consisting of an ultraviolet-absorbing resin (i) according to any one of claims 1 to 4 and an aqueous ultraviolet-absorbing resin emulsion (ie) according to any one of claims 5 to 7, and
- an aqueous emulsion (iie) of an other resin (ii).

Preferably, the aqueous resin emulsion composition according to the present invention comprises the aqueous ultraviolet-aborbing resin emulsion (ie), and the aqueous emulsion (iie) of other resin (ii).

The aqueous emulsion (iie) of other resin (ii) is not particularly limited, and conventional emulsions can widely be used. An aqueous emulsion of a thermoplastic resin is preferably used, while considering ease of addition, and the like.

Example of thermoplastic resin for forming an aqueous emulsion include a polyvinyl chloride, polyvinylidene chloride, polyolefin, polycarbonate, polystyrene, acrylic resin, methacrylic resin, polyamide, polyester, acrylonitrile- butadine-styrene (ABS) resin, polyurethane resin, vinyl chloride-vinylidene chloride-acrylonitrile copolymer, acrylanitrile-styrone (As) resin, vinyl acetate resin, polyphenylene ether, polysulfone, polyether sulfone, polyether ether ketone, liquid crystal plastics, and the like. Of those, the polyvinyl chloride, polyvinylidene chloride, polyolefin, polycarbonate, polystyrene, acrylic resin, methacrylic resin, polyamide, polyester. ASS resin and polyurethane resin are preferably used. Of those, thermoplastic resin* having poor alkali resistance such an polyvinyl chloride, polyvinylidene chloride, polycarbonate, polyester or polyurethane resin (iiu); thermoplastic resins having poor solvent resistance, such as polyamide; and acrylic resins (iia) having good weather resistance are further preferably used.

Those resins or aqueous resin emulsions can be used alone or as a mixture of two or more thereof. Those aqueous resin emulsions can be obtained from commercially available products.

The acrylic resin (iia) used in the present invention can be commercially available products. Examples of the commercially available products include Primal WL-51, Primal WL-96. Primal CL-103 and Primal CL-104 (products of Rohm & Haas Co.)

Examples of the urethane resin (iiu) used in the present invention include aqueous polyester type polyurethane, aqueous polyether type polyurethane, aqueous polycarbonate type polyurethane and aqueous polyester/polycarbonate type polyurethane. Those can be used alone or as a mixture of two or more thereof.

The aqueous urethane resin can be commercially available products, and examples thereof include NeoRez R-960 and NeoRez R-970 (products of Avecia KK.).

Compounding proportions of the ultraviolet-absorbing resin (i) and other resin (ii) constituting the aqueous emulsion resin composition according to the present invention are not particularly limited, and can appropriately be selected from the wide ranges. The proportion of the ultraviolet-absorbing resin (i) is generally 0.005 to 100% by weight, preferably 0.05 to 95% by weight, more preferably 0.1 to 90% by weight, when the sum of the ultraviolet-absorbing resin (i) and the other resin (ii) is 100% by weight.

Further, if necessary, the aqueous emulsion resin and aqueous emulsion resin composition of the present invention can contain at least one of conventional additives such as ultraviolet absorbers, antioxidants, light stabilizers, processing stabilizers, anti-aging agents or compatibilizers.

The mixing method employed may be the conventional methods.

Examples of the ultraviolet absorber include, for example, benzotriazoles such as 2-(2'-hydroxy-5'-methylphenyl)benzo-triazole or 5-chloro-2-(2'-hydroxy-3',5'-di-tert-butylphenyl)benzotriazole ; and benzophenones such as 2,4-dihydroxybenzophenone or 2-hydroxy-4-octyloxybenzophenone. Materials obtained by imparting a group having polymerizable double bond, such as a vinyl group, to the ultraviolet-absorber and polymerizing the same to increase molecular weight can also be used as the ultraviolet absorber.

Examples of the antioxidant include hindered phenolic antioxidants such as 1,6-hexanediol-bis [3-(3,5-di-tert-butyl-4-hydroxyphenyl)propio nate] or 3,5-di-tert-butyl-4-hydroxybenzylphosphonate diethyl ester; organic sulfuric antioxidants such as dilauryl 3,3'-dithiodipropionate: and phosphorus antioxidants such as trialkylphenyl phosphate.

Examples of a light stabilizer include hindered-amine light stabilizers such as bis(2,2,6,6-tetramethyl-4-piperidyl)sebacate; and nickel salt-based light stabilizers such as nickel dibutyldithiocarbamate.

Examples of a processing stabilizer include phosphorus stabilizers such as tris(2,4-di-tert-butylphenyl)phosphate.

Examples of an anti-aging agent include 1,1- bis (4-hydroxyphenyl) cyclohexane, N,N'-diphenyl-p-phenylenediamine, and the like.

Formulation amounts of those additives are not particularly limited, but those additives are generally used in an amount of 0.01 to 20% by weight to 100% by weight of a resin component of the aqueous emulsion resin, the aqueous emulsion resin composition or the aqueous emulsion of other resin according to the present invention.

The aqueous resin emulsion composition of the present invention can be used in all the applications in which an aqueous emulsion of resin is used. In particular, the composition can suitably be used for the applications having a fear of exposure to sunlight or light containing ultraviolet rays.

Examples of the applications include glass substitutes and surface coating materials thereof; window glasses of houses, facilities, transports or the like; coating materials for lighting glasses and light source protecting glasses; interior and exterior materials and interior and exterior coating materials of the houses, facilities, transports or the like; members for a light source emitting ultraviolet rays, such as fluorescent lamps or mercury lamps; members for precision machines and electric and electronic devices; materials for shielding electromagnetic waves generated from various kinds of displays; vessels or wrapping materials of foods, chemical products, chemicals or the like; agricultural and industrial sheets or film materials; discoloration preventives for printedmatters, dyedmaterials, dyes, pigments or the like; cosmetic components of sun-block creams, shampoos, rinses or hair dressings; fabric products and fibers for clothes such as sport wears, stockings or caps and hats; household interior trims such as curtains, carpets or wallpapers; medical instruments such as plastic lenses, contact lenses or false eyes; optical products such as optical filters, prisms, mirrors or photographic materials; stationery such as tapes or inks; and signs, indicators and surface coating materials thereof.

The resin composition or the aqueous resin emulsion composition in aspects I to VII is useful for anchor agents of various plastic molded articles including sheets, films, etc., primers, protective coating agents, decorative coating agents, function-imparting coating agents or the like, in the case of plastic coating; coating for artificial leathers such as bags, shoes or woody building materials, furniture, floors or the like in the case of woody material coating.

As the organic solvents, those exemplified in the aspects I to VII are enumerated.

A salt between the compound (C) introduced into the polyurethane-based polymer and the neutralizing agent can be formed either before or after the urethanization reaction.

Resins obtained from the aqueous polyurethane emulsion of the invention VIII are extremely excellent with regard to all of the flexibility, light resistance, hydrolysis resistance and heat resistance, as compared with resins obtained from the conventional aqueous polyurethane emulsion. Therefore, the resin is particularly useful for non-woven fabrics, woven fabrics, and knitted web, and also in the field of artificial leather which undergoes a dyeing step after impregnation in an aqueous polyurethane emulsion.

### Example

Aspects I to VII are specifically explained with reference Aspects I to VII are specifically explained with reference to the following examples, but the inventions are not limited to those examples.

Unless otherwise indicated, parts by weight and % by weight

Unless otherwise indicated, parts by weight and % by weight are in terms of a solid content.

### (Common Elements in aspects I to VII)

### Synthesis of polyester polyol (A) having an ultraviolet-absorbing group

Polyester polyol (A) used was the same compounds used in Synthesis Example 1 and Synthesis Example 2 described in JP-A-10-265557. Therefore, physical properties etc. of a reaction product obtained are the same as described in JP-A-10265557.

### [Synthesis Example 1] (Production Example 1 of Component (A))

129.3 g of 1,1-bis-[3-(2H-benzotriazol-2-yl)-4-hydroxybenzene ethanol] methane (trade name "MBEP", manufactured by Otsuka Chemical Co.), 170.3 g of ε-caprolactone and 50 ppm of mono-n-butyltin fatty acid salt (trade name "SCAT-24", manufactured by Sankyo Organic Chemicals Co. , Ltd.) were added to a glass-made flask equipped with a cooling pipe, a nitrogen gas inlet, a thermometer and a stirrer. The reaction temperature was maintained at 150°C, and after 6 hours, the concentration of ε-caprolactone in the reaction liquid was measured by gas chromatography. As a result, because the concentration was 0.43%, the reaction was completed.

The reaction product was liquid polyester polyol (1) at room temperature, having an acid value of 1.8 mg-KOH/g, a viscosity of 2,645 cP/60°C, a number-average molecular weight (Mn) (by GPC analysis) of 1, 391, a weight-average molecular weight (Mw) of 1,688 and Mw/Mn of 1.213.

10 mg of the polyester polyol (1) was dissolved in 50 ml of chloroform, and ultraviolet and visible absorbing spectrum was measured using a quartz cell having an optical path length of 1 mm. As a result, it showed sufficiently large absorption in ultraviolet region as shown in JP-A-10265557.

### [Synthesis Example 2] (Production Example 2 of Component (A))

Using the same apparatus and raw materials as in Synthesis Example 1, 97.3 g of 1,1-bis-[3-(2H-benzotriazol-2-yl)-4-hydroxybenzene ethanol] methane, 206.3 g of ε-caprolactone and 50 ppm of mono-n-butyltin fatty acid salt were added. The reaction temperature was maintained at 150°C, and after 6 hours, the concentration of ε-caprolactone in the reaction liquid was measured by gas chromatography. As a result, because the concentration was 0.55%, the reaction was completed.

The reaction product was solid polyester polyol (2) at room temperature, having an acid value of 2.5 mg-KOH/g, a viscosity of 987 cP/60°C, Mn by GPC analysis of 2,017, Mw of 2,465 and Mw/Mn of 1.222.

10 mg of the polyester polyol (2) was dissolved in 50 ml of chloroform, and ultraviolet and visible absorbing spectrum was measured using a quartz cell having an optical path length of 1 mm. As a result, it showed sufficiently large absorption in ultraviolet region as shown in JP-A-10265557.

Examples relating to aspect I are shown below.

### (Example I-1)

250 parts by weight of acetone and 262.2 parts by weight of isophorone diisocyanate (IPDI) were placed in a glass-made flask equipped with a cooling pipe, a nitrogen gas inlet, a dropping funnel, a thermometer and a stirrer. 689.77 parts by weight of the polyester polyol (1) obtained in Synthesis Example 1 were added dropwise to the flask under nitrogen atmosphere while stirring. Temperature of the flask was elevated to 65°C, and reaction was conducted for 2 hours. 48.02 parts by weight of dimethylol butanoic acid (DMBA) was charged, 0.30 part by weight of dibutyltin dilaurate was further charged, and reaction was continued for 10 hours. NCO concentration at the time of completion of the reaction of prepolymer was 0.452 mmol/g (theoretical NCO concentration: 0.44 mmol/g), and a number-average molecular weight by gel permeation chromatography (GPC) was 4,400, and a weight-average molecular weight was 8, 100. Next, 28.65 parts by weight of dimethyl aminoethanol were added to neutralize a carboxylic acid portion, and an acetone solution of the prepolymer was added dropwise to 1,600 parts by weight of water to form an emulsion. Acetone as solvent was removed under reduced pressure to obtain an aqueous emulsion of the desired ultraviolet-absorbing resin (I-A-1). Non-volatile content concentration in the aqueous emulsion of this ultraviolet-absorbing resin was 40% by weight, and an average particle size measured by a light scattering particle size measurement device (hereinafter, an average particle sizewasmeasuredwitha light scattering particle size measurement device, trade name "ELS-800", manufactured by Otsuka Electron Co.) was 95 nm.

### (Example I-2)

Synthesis was conducted in the same manner as in Example I-1 except for changing the polyester polyol (1) to the polyester polyol (2) obtained in Synthesis Example 2, to obtain an aqueous emulsion of the desired ultraviolet-absorbing resin (I-A-2). Non-volatile content concentration in the aqueous emulsion of this ultraviolet-absorbing resin was 40% by weight, and an average particle size was 82 nm.

### (Example I-3 and Comparative Example I-1)

100 parts by weight (solid content) of an aqueous polyurethane emulsion (trade name "Neorez R-960", a product of Avecia KK) and the aqueous emulsion of the ultraviolet-absorbing resin obtained in Example I-1 or I-2, or the conventional ultraviolet absorber were mixed in the proportions (solid content) as shown in Table I-1 below. The resulting mixture was flow-cast on a Teflon-coated glass plate to have a film thickness after drying of 100 µm. The coating was cured at room temperature for 14 days to obtain a film.

The thus obtained film was subjected to an exposure test by a sunshine weatherometer. After exposure for 1,000 hours, a tensile strength test was conducted, and tensile strength and elongation at break of the respective film were examined. Test conditions are shown below, and test results obtained are also shown in Table I-1 below. As a result, it is apparent that the invention products have excellent light resistance as compared with the conventional products.

**TABLE I-1**

| | | Aqueous emulsion of ultraviolet-absorbing resin etc. | Parts by weight | Initial | After 1,000 hours |
|---|---|---|---|---|---|
| Example I-3 | No.1 | I-A-1 | 3 | 198% | 195% |
| | No.2 | I-A-2 | 3 | 203% | 200% |
| Comparative Example I-1 | No.1 | Trade name: (MBEP) | 3 | 168% | 81% |
| | No.2 | Not compounded | 0 | 206% | 18% |

| | | | | | |
|---|---|---|---|---|---|
| (1) Instrument used in exposure test: Dual cycle sunshine weatherometer WEL-SUN-DC, manufactured by Suga Instrument Co., Ltd., light source: carbon arc, rainfall cycle: 18 minutes rainfall in every 120 minutes, temperature: black panel 80°C (2) Instrument used in tensile strength test: Shimadzu Autograph DSC, manufactured by Shimadzu Corp., conditions: 200 kg/FS. cross head speed 50 mm/min, GL-30 mm | | | | | |

### (EXAMPLE 1-4 AND COMPARATIVE EXAMPLE I-2)

100 parts by weight (solid content) of an acrylic aqueous emulsion ("Neocryl A-6092") (a product of Avecia KK) and the aqueous emulsion of the ultraviolet-absorbing resin obtained in Example I-1 or I-2, or the conventional ultraviolet absorber were mixed in the proportions (solid content) as shown in Table I-2 below. The resulting mixture was flow cast on a Teflon-coated glass plate to have a film thickness of 100 µm after drying. The coating was cured at room temperature for 14 hours to obtain a film. The thus-obtained film was subjected to the exposure test in the same manner as in Example I-3. The results obtained are also shown in Table I-2.

**TABLE I-2**

| | | Aqueous emulsion of ultraviolet-absorbing resin, etc. | Parts by weight | Exposure time |
|---|---|---|---|---|
| Example I-4 | No.1 | I-A-1 | 3 | No change for 2,000 hours |
| | No.2 | I-A-2 | 3 | No change for 2,000 hours |
| Comparative Example I-2 | No.1 | Trade name: (MBEP) | 3 | Colored after 1,200 hours |
| | No.2 | Not compounded | 0 | Colored after 600 hours |

### (Example I-5 and Comparative Example I-3)

The aqueous emulsion of the ultraviolet-absorbing resin obtained in Example I-1 or the conventional ultraviolet absorber, and a polystyrene aqueous emulsion were mixed in compounding proportions (solid content) as shown in Table I-3. The resulting mixture was flow-cast on a quartz glass-made disk having a diameter of 30 mm and a thickness of 1 mm with a spin coater and dried to form a uniform thin film having a thickness of 0.9 to 1.0 µm on the disk. The coated disk was placed in hot water at 70°C, and absorbance of the thin film at 340 nm was measured in every 2 hours.

In the film obtained using the conventional ultraviolet absorber, absorbance was linearly decreased by eluation of the ultraviolet absorber used. On the other hand, the film obtained using the aqueous emulsion of ultraviolet-absorbing resin obtained in Example I-1 did not show eluation (bleedout), and the same level of absorbance as in the initial absorbance was maintained. Initial absorbance (A0), absorbance after 10 hours (A10) at 340 nm, and absorbance retention (%, A10/A0), of the respective thin films are shown in Table I-3.

**TABLE I-3**

| | Aqueous emulsion resin composition, etc. | Compounding amount | Absorbance | Absorbance |
|---|---|---|---|---|
| | | (mg) | A0/A10 | Retention (%) |
| Example I-5 | I-A-1/PSE^{*1} | 150/850 | 0.315/0.312 | 99.2 |
| Comparative Example I-3 | Trade name: (MBEP)/PSE^{*1} | 150/850 | 0.325/0.243 | 74.8 |

| | | | | |
|---|---|---|---|---|
| PSE^{*1}: Polystyrene aqueous emulsion | | | | |

The disk 10 hours afterward was subjected to the exposure test with the same sunshine weatherometer as used in Example I-1. As a result, any change was not visually observed in the disk obtained in Example I-5 even after 500 hours. On the other hand, yellowing was observed in the disk obtained in Comparative Example I-3 after 200 hours. It is therefore understood that the composition according to the present invention has stable light resistance.

### (Example 1-6 and Comparative Example I-4)

The aqueous emulsion of ultraviolet-absorbing resin obtained in Example I-2 or conventional ultraviolet absorber, and an acrylic aqueous emulsion Neocryl A-6092 (a product of Avecia KK.) were mixed in compounding proportions (solid content) as shown in Table 1-4. Using the resulting aqueous dispersion, a uniform thin film having a thickness of about 1 µm was prepared in the same manner as in Example I-5. The respective disks were placed in hot water at 70°C, and absorbance of the thin film at 340 nm was measured in every 2 hours. The results obtained are shown in Table I-4.

**TABLE I-4**

| | Aqueous emulsion resin composition, etc. | Compounding amount | Absorbance | Absorbance |
|---|---|---|---|---|
| | | (mg) | A0/A10 | Retention (%) |
| Example I-6 | I-A-1/ACE^{*2} | 150/850 | 0.465/0.456 | 98.0 |
| Comparative Example I-4 | Trade name:(MBEP)/ACE^{*2} | 100/900 | 0.430/0.079 | 18.4 |

| | | | | |
|---|---|---|---|---|
| ACE^{*2}: Neocryl A-6092 (a product of Avecia KK) | | | | |

As a result, it was clarified that in the aqueous emulsion of the resin composition of the invention I, substantially the entire amount of the aqueous emulsion of ultraviolet-absorbing resin is retained in the resin matrix, and occurrence of eluation (bleedout) is less.

According to aspect I, an aqueous emulsion of the ultraviolet-absorbing resin having stable light resistance at high level over a long period of time and an emulsion of resin composition containing the same can be provided.

Examples relating to the aspect II are shown below.

### (Example II-1)

250 parts by weight of acetone and 53.8 parts by weight of isophorone diisocyanate (IPDI) were placed in a glass-made flask equipped with a cooling pipe, a nitrogen gas inlet, a dropping funnel, a thermometer and a stirrer. 178.7 parts by weight of the polyester polyol (1) obtained in Synthesis Example 1 were added dropwise to the flask under nitrogen atmosphere while stirring. Temperature of the flask was elevated to 65°C, and reaction was conducted for 2 hours 17.5 parts by weight of N-methyldiethanolamine were charged, 0.30 part by weight of dibutyltin dilaurate was further charged, and reaction was continued for 10 hours. NCO concentration at the time of completion of the reaction of prepolymer was 0.452 mmol/g (theoretical NCO concentration: 0.44 mmol/g), and a number-average molecular weight by GPC was 4.400, and a weight-average molecular weight was 8,100. Next, 8.84 parts by weight of acetic acid were added to neutralize an amine component, and an acetone solution of the prepolymer was added dropwise to 600 parts by weight of water to form an emulsion. Acetone as a solvent was removed under reduced pressure to obtain the desired aqueous ultraviolet-absorbing resin (II-UVR-1). Non-volatile content concentration in this aqueous ultraviolet-absorbing resin was 40% by weight, and an average particle size was 170 nm.

### (Example II-2)

Synthesis was conducted in the same manner as in Example I-1 except for changing the polyester polyol (1) to the polyester polyol (2) obtained in Synthesis Example 2, to obtain the desired aqueous ultraviolet-absorbing resin (II-UVR-2). Non-volatile content concentration in the aqueous emulsion of this ultraviolet-absorbing resin was 40% by weight, and an average particle size was 155 nm.

### (Example II-3 and Comparative Example II-1)

100 parts by weight (solid content) of an aqueous cationic polyurethane emulsion (trade name "F- 8559D", a product of Daiichi Kogyo Seiyaku K.K.) and the aqueous ultraviolet-absorbing resin obtained in Example II-1 or II-2, or the conventional ultraviolet absorber were mixed in the proportions (ratio based on solid contents) as shown in Table II-1. The resulting mixture was flow-cast on a Teflon-coated glass plate in a film thickness of 100 µm after drying. The coating was cured at room temperature for 14 days to obtain a film.

The thus obtained film was subjected to exposure test by sunshine weatherometer as it is, like Example I of the present invention. After exposure for 1,000 hours, a tensile strength test was conducted, and tensile braking strength of the respective films were examined. Test conditions are shown below, and test results obtained are also shown in Table II-1. As a result, it is apparent that the invention products have excellent light resistance as compared with the conventional products.

**TABLE II-1**

| | | Aqueous ultraviolet-absorbing resin | Parts by weight | Initial (%) | 1.000 hours(%) |
|---|---|---|---|---|---|
| Example II-3 | No.1 | II-UVR-1 | 3 | 118 | 120 |
| | No.2 | II-UVR-2 | 3 | 115 | 117 |
| Comparative Example II-1 | No.1 | Trade name: [MBEP] | 3 | 106 | 61 |
| | No.2 | Not compounded | 0 | 108 | 17 |

### (Example II-4 and Comparative Example II-2)

Films obtained in Example II-3 and Comparative Example II-1 were subjected to the exposure test in the same manner as in Example II-3. The results obtained are shown in Table II-2.

**TABLE II-2**

| | | Aqueous ultraviolet-absorbing resin | Parts by weight | Exposure test |
|---|---|---|---|---|
| Example II-4 | No.1 | II-UVR-1 | 3 | No change for 2,000 hours |
| | No.2 | II-UVR-2 | 3 | No change for 2,000 hours |
| Comparative Example II-2 | No.1 | Trade name: [MBEP] | 3 | Colored after 1,200 hours |
| | No.2 | Not compounded | 0 | Colored after 600 hours |

### (Example II-5 and Comparative Example II-3)

The aqueous emulsion of ultraviolet-absorbing resin obtained in Example II-1 or the conventional ultraviolet absorber, and an aqueous polystyrene-acryl emulsion (trade name "NeoCryl A-1091", a product of Avecia Co.) were mixed in formulation amounts (proportions based on solid contents) as shown in Table II-3. The resulting mixture was flow-cast on a quartz glass-made disk having a diameter of 30 mm and a thickness of 1 mm with a spin coater and dried to form a uniform thin film having a thickness of 0.9 to 1.0 µm. The coated disk was placed in hot water at 70°C, and absorbance of the thin film at 340 nm was measured in every 2 hours.

In the film obtained using the conventional ultraviolet absorber (Comparative Example II-3), absorbance was more or less linearly decreased by eluation of the ultraviolet absorber used. On the other hand, the film obtained using the aqueous ultraviolet-absorbing resin obtained in Example II-1 did not show eluation (bleedout), and the same level of absorbance as in the initial absorbance was maintained. Initial absorbance (A0) and absorbance after 10 hours (A10) at 340 nm, and absorbance retention (%, A10/A0), of the respective thin films are shown in Table II-3.

**TABLE II-3**

| | Aqueous ultraviolet-absorbing resin | Compounding amount | Absorbance ratio AO/A1^{*4} | Absorbance Retention (%) |
|---|---|---|---|---|
| Example II-5 | II-UVR-1/PSEm^{*3} | 150/850 | 0.315/0.311 | 98.7 |
| Comparative Example II-3 | Trade name: [MBEP]/PSEm^{*3} | 150/850 | 0.325/0.243 | 74.8 |

| | | | | |
|---|---|---|---|---|
| PSEme^{*3}: Aqueous polystyrene acryl emulsion A0/A10^{*4}. Initial absorbance/Absorbance after 10 hours | | | | |

The disks 10 hours afterward were respectively subjected to an exposure test with the same sunshine weatherometer as used in Example II-1. As a result, no change was visually observed in the disk obtained in Example II-5 even after 500 hours. On the other hand, yellowing was observed in the disk obtained in Comparative Example II-3 after 200 hours. It is therefore understood that the composition according to aspect II has stable light resistance.

### (Example II-6 and Comparative Example II-4)

The aqueous ultraviolet-absorbing resin obtained in Example II-2 or the conventional ultraviolet absorber, and an aqueous cationic polyurethane emulsion F-8559D as mentioned above were mixed in formulation amounts (ratio based on solid contents) as shown in Table II-4. Using the resulting aqueous dispersion, a uniform thin film having a thickness of about 1 µm was formed in the same manner as in Example II-5. The disks were respectively placed in hot water at 70°C, and initial absorbance (AO) and a absorbance after 10 hours (A10) at 340nm, and absorbance retention (%, A10/AO), of the respective thin films were measured. The results obtained are shown in Table II-4.

**TABLE II-4**

| | Aqueous ultraviolet-absorbing resin | Compounding amount | Absorbance ratio AO/A10^{*4} | Absorbance Retention (%) |
|---|---|---|---|---|
| Example II-6 | II-UVR-2/CPUEm^{*5} | 175/825 | 0.465/0.455 | 97.8 |
| Comparative 4 Example II-4 | [MBEP]/CPUEm^{*5} | 100/900 | 0.413/0.076 | 18.4 |

| | | | | |
|---|---|---|---|---|
| CPUEm^{*5}: Cationic aqueous polyurethane emulsion F-8559D | | | | |

It was clarified from the results shown in Table II-4 that in the composition of the invention, the aqueous ultraviolet-absorbing resin is completely retained in the resin matrix, and eluation (bleedout) does not occur at all.

According to aspect II, a resin composition having stable light resistance at high level over long period of time, i.e., having ultraviolet-absorbing ability, can be provided.

Examples relating to aspect III are shown below.

### (Example III-1)

225 parts by weight of methyl ethyl ketone, 262 parts by weight of dimethylaminoethyl methacrylate, 13 parts by weight of 1-mercapto-2,3-propanediol and 1.5 parts by weight of azobismethyl butyronitrile (ABN-E, a product of Wako Pure Chemical Industries) were charged in a glass-made flask equipped with a cooling pipe, a nitrogen gas inlet, a dropping funnel, a thermometer and a stirrer, and polymerization was conducted at 80°C for 6 hours to obtain a macromonomer. The thus obtained macromonomer had non-volatile content of 53.2%, hydroxyl value of 25.8 KOHmg/g and amine value of 181 KOHmg/g.

90 parts by weight of methyl ethyl ketone, 0.30 part by weight of dibutyltin dilaurate and 20.7 parts by weight of isophorone diisocyanate (IPDI) were placed in a reactor. 129.2 parts by weight (solid content) of the polyester polyol (1) obtained in Synthesis Example 1 and 21.0 parts by weight (solid content) of the macromonomer obtained above were added dropwise under nitrogen atmosphere while stirring. Temperature of the flask was elevated to 75°C, and the reaction was continued for 6 hours. Number-average molecular weight by GPC of a urethane solution at the time of the completion of the reaction was 4,000, and the weight-average molecular weight was 10, 000. 9.73 parts by weight of acetic acid was added to 217.4 parts by weight of the urethane solution obtained above to quaternize tertiary amine portion. The resulting solution was added dropwise to 507 parts by weight of water to form an emulsion. Methyl ethyl ketone as a solvent was removed under reduced pressure to obtain the objective aqueous ultraviolet-absorbing resin emulsion (III-UVR-1). This aqueous ultraviolet-absorbing resin emulsion had non-volatile content concentration of 35%, and an average particle size was 90 nm.

### (Example III-2)

Synthesis was conducted in the same manner as in Example III-1 except for changing the polyester polyol (1) to the polyester polyol (2) obtained in Synthesis Example 2, to obtain the desired ultraviolet-absorbing emulsion (III-UVR-2). Non-volatile content concentration in this ultraviolet-absorbing resin was 35% by weight, and an average particle size was 82 nm.

### (Example III-3 and Comparative Example III-1)

100 parts by weight (solid content) of an aqueous cationic polyurethane emulsion (trade name "F-8559D", a product of Daiichi Kogyo Seiyaku K.K.) and the ultraviolet-absorbing emulsion obtained in Example III-1 or III-2, or the conventional ultraviolet absorber were mixed in the proportions (solid content) as shown in Table III-1. The resulting mixture was flow-cast on a Teflon-coated glass plate to have a film thickness of 100 µm after drying. The coating was cured at room temperature for 14 days to obtain a film.

**TABLE III-1**

| | | Aqueous ultraviolet-absorbing resin | Parts by weight | Initial (%) | 1.000 hours (%) |
|---|---|---|---|---|---|
| Example III-3 | No.1 | III-UVR-1 | 3 | 120 | 119 |
| | No.2 | III-UVR-2 | 3 | 118 | 117 |
| Comparative Example III-1 | No.1 | Trade name:[MBEP] | 3 | 106 | 61 |
| | No.2 | Not compounded | 0 | 108 | 17 |

Those films were subjected to the exposure test by sunshine weatherometer in the same manner as in the examples of the invention I. The tensile strength test after exposure for 1,000 hours was conducted, and the tensile strength and elongation at break were respectively examined. Test conditions are shown below, and the test results obtained are shown in Table III-1.

As a result, it is apparent that the invention products have excellent light resistance as compared with the conventional products.

### (Example III-4 and Comparative Example III-2)

Films obtained in Examples III-3 and Comparative Example III-1 were subjected to the exposure test in the same manner as in Example III-3. The results obtained are shown in Table III-2.

**TABLE III-2**

| | | Aqueous ultraviolet-absorbing resin | Parts by weight | Exposure test |
|---|---|---|---|---|
| Example III-4 | No.1 | III-UVR-1 | 3 | No change for 2,000 hours |
| | No.2 | III-UVR-2 | 3 | No change for 2,000 hours |
| Comparative Example III-2 | No.1 | Trade name: [MBEP] | 3 | Colored after 1,200 hours |
| | No.2 | Not compounded | 0 | Colored after 600 hours |

### (Example III-5 and Comparative Example III-3)

The ultraviolet-absorbing emulsion obtained in Example III-1 or the conventional ultraviolet absorber, and a polystyrene aqueous emulsion (trade name: NeoCryl A-1091, a product of Avecia Co. Ltd.) were mixed in formulation amounts (ratio by weight based on solid content) as shown in Table III-3. The resulting mixture was flow-cast on a quartz glass-made disk having a diameter of 30 mm and a thickness of 1 mm with a spin coater and dried to form a uniform thin film having a thickness of 0.9 to 1.0 µm. The coated disk was placed in 70°C hot water, and absorbance of the thin film at 340 nm was measured in every 2 hours.

In the film obtained using the conventional ultraviolet absorber (Comparative Example III-3), absorbance was more or less linearly decreased by eluation of the ultraviolet absorber used. On the other hand, the film obtained using ultraviolet-absorbing emulsion obtained in Example III-1 did not show eluation (bleedout), and the same level of absorbance as in the initial absorbance was maintained. Initial absorbance (A0) and absorbance after 10 hours (A10) at 340 nm, and absorbance retention (%, A10/A0), of the respective thin films are shown in Table III-3.

**TABLE III-3**

| | Aqueous ultraviolet-absorbing resin | Compounding amount | Absorbance ratio AO/A10^{*4} | Absorbance Retention (%) |
|---|---|---|---|---|
| Example III-5 | III-UVR-1/PSEm^{*3} | 150/850 | 0.316/0.310 | 98.1 |
| Comparative Example III-3 | Trade name[MHEP]/PSEm^{*3} | 150/850 | 0.325/0.243 | 74.8 |

| | | | | |
|---|---|---|---|---|
| PSEm^{*3}; Aqueous polystyrene acryl emulsion A0/A10^{*4}: Initial absorbance/Absorbance after 10 hours | | | | |

The respective disks after 10 hours were subjected to the exposure test with the same sunshine weatherometer as used in Example III-1. As a result, no change was visually observed in the disk obtained in Example III-5 even after 500 hours. On the other hand, yellowing was observed in the disk obtained in Comparative Example III-3 af ter 200 hours. It is therefore understood that the composition according to the present invention has stable light resistance.

### (Example III-6 and Comparative Example III-4)

The ultraviolet-absorbing emulsion obtained in Example III-2 or the conventional ultraviolet absorber, and an aqueous cationic polyurethane emulsion F-8559D (a product of Daiichi Kogyo Seiyaku K.K.) were mixed in formulation amounts (ratio by weight based on solid contents) as shown in Table III-4. Using the resulting aqueous dispersion, a uniform thin film having a thickness of about 1 µm was formed in the same manner as in Example III-5. The disks were respectively placed in 70°C hot water, and absorbance at 340 nm of the thin film was measured. The results obtained are shown in Table III-4.

**TABLE III-4**

| | Aqueous ultraviolet-absorbing resin | Compounding amount | Absorbance ratio A0/A10^{*4} | Absorbance Retention (%) |
|---|---|---|---|---|
| Example III-6 | III-UVR-2/CPUEm^{*5} | 175/825 | 0.463/0.455 | 98.3 |
| Comparative Example III-4 | Trade name: 5 [MBEP]/CPUEm 5 | 100/900 | 0.413/0.076 | 18.4 |

| | | | | |
|---|---|---|---|---|
| PSEm^{*5}: Aqueous cationic polyurethane emulsion F-8559D AO/A10^{*4}: Initial absorbance/Absorbance after 10 hours | | | | |

It was clarified from the results that in the composition of the invention, the aqueous ultraviolet-absorbing resin is completely retained in the resin matrix, and eluation (bleedout) hardly occurs.

According to aspect III, a resin composition having stable light resistance at high level over long period of time can be provided.

Examples relating to aspect IV are shown below.

### (Example IV-1)

225 parts by weight of methyl ethyl ketone, 262 parts by weight of methoxypolyethylene glycol methacrylate (Blemer PME-100, a product of Nippon Oils and Fats Co., Ltd.), 13 parts by weight of 1-mercapto-2,3-propanediol and 1.5 parts by weight of azobismethyl butyronitrile were charged in a glass-made flask equipped with a cooling pipe, a nitrogen gas inlet, a dropping funnel, a thermometer and a stirrer, and polymerization was conducted at 80°C for 6 hours to obtain a macromonomer. The thus obtained macromonomer had a non-volatile content of 53.2%. Next, 139. 8 parts by weight of acetone, 0.3 part by weight of dibutyltin dilaurate and 20.7 parts by weight of isophorone diisocyanate (IPDI) were introduced, and 129.2 parts by weight of the polyester polyol (1) obtained in Synthesis Example 1 and 21.0 parts by weight of the macromonomer obtained above were added dropwise under nitrogen atmosphere while stirring. The temperature of the flask was elevated to 75°C, and the reaction was continued for 6 hours. The resulting urethane solution at the time of the completion of the reaction had a number-average molecular weight by GPC of 4,000 and a weight-average molecular weight of 10,000. Next, 217.4 parts by weight of the urethane solution were added dropwise to 507 parts by weight of water to form an emulsion. Thereafter, acetone as a solvent was removed under reduced pressure to obtain the desired ultraviolet-absorbing resin emulsion (IV-UVR-1). The ultraviolet-absorbing resin emulsion had a non-volatile content concentration of 35%, and an average particle size of 150 nm.

### (Example IV-2)

Synthesis was conducted in the same manner as in Example IV-1 except for changing the polyester polyol (1) to the polyester polyol (2) obtained in Synthesis Example 2, to obtain the desired ultraviolet-absorbing resin emulsion (IV-UVR-2). Non-volatile content concentration in this ultraviolet-absorbing resin emulsion was 35% by weight, and an average particle size was 170 nm.

### (Example IV-3 and Comparative Example IV-1)

100 parts by weight (solid content) of an aqueous cationic polyurethane emulsion F-8559D and the ultraviolet-absorbing resin emulsion obtained in Example IV-1 or IV-2, or the conventional ultraviolet absorber were mixed in the proportions (based on solid content) as shown in Table IV-1. The resulting mixture was cast on a Teflon-coated glass plate to have a film thickness of 100 µm after drying. The coating was cured at room temperature for 14 days to obtain a film.

**TABLE IV-1**

| | Aqueous emulsion of ultraviolet-absorbing resin | | Parts by weight Initial, | Initial (%) | After 1,000 hours (%) |
|---|---|---|---|---|---|
| Example IV-3 | No.1 | IV-UVR-1 | 3 | 145 | 143 |
| | No.2 | IV-UVR-2 | 3 | 139 | 138 |
| Comparative Example IV -1 | No. 1 | Trade name:[MBEP] | 3 | 106 | 61 |
| | No.2 | Not compounded | 0 | 108 | 17 |

Those films were subjected to the exposure test by sunshine weatherometer in the same manner as in the examples of the invention I. The tensile strength test after exposure for 1,000 hours was conducted, and the tensile strength and elongation at break were respectively examined. Test conditions are shown below, and the test results obtained are shown in Table IV-1.

It is apparent from the results that the invention products have excellent light resistance as compared with the conventional products.

### (Example IV-4 and Comparative Example IV-2)

Films obtained in Examples IV-3 and Comparative Example IV-1 were subjected to the exposure test in the same manner as in Example IV-3, and change in coloration was observed. The results obtained are shown in Table IV-2.

**TABLE IV-2**

| | Aqueous emulsion of ultraviolet-absorbing resin | | Parts by weight | Exposure test |
|---|---|---|---|---|
| Example IV-3 | No.1 | IV-UVR-1 | 3 | No change for 2,000 hours |
| | No.2 | IV-UVR-2 | 3 | No change for 2,000 hours |
| Comparative Example IV-1 | No.1 | [MBEP]:Trade name | 3 | Colored after 1,200 hours |
| | No.2 | Not compounded | 0 | Colored after 600 hours |

### (Example IV-5 and Comparative Example IV-3)

The aqueous emulsion of the ultraviolet-absorbing resin obtained in Example IV-1 or the conventional ultraviolet absorber, and a aqueous polystyrene emulsion were mixed in formulation amounts as shown in Table IV-3. The resulting mixture was flow-cast on a quartz glass-made disk having a diameter of 30 mm and a thickness of 1 mm with a spin coater and dried to form a uniform thin film having a thickness of 0.9 to 1.0 µm. The coated disk was placed in hot water at 70°C, and absorbance of the thin film at 340 nm was measured in every 2 hours.

In the film obtained using the conventional ultraviolet absorber (Comparative Example IV-3), absorbance was more or less linearly decreased by eluation of the ultraviolet absorber used. On the other hand, the film obtained using the aqueous emulsion of the ultraviolet absorber obtained in Example IV-1 did not show eluation (bleedout), and the same level of absorbance as in the initial absorbance was maintained. Initial absorbance (A0) and absorbance after 10 hours (A10) at 340 nm, and absorbance retention (%, A10/A0), of the respective thin films are shown in Table IV-3.

**TABLE IV-3**

| | Aqueous emulsion of | Compounding | :AO | Absorbance |
|---|---|---|---|---|
| | resin composition | amount | :A10 | Retention (%) |
| Example IV-5 | IV-UVR-1+aqueous | 150 | 0.323 | 99 0 |
| | polystyrene emulsion | 850 | 0.320 | |
| Comparative Example IV-3 | [MBEP]+aqueous | 150 | 0.325 | 74.8 |
| | polystyrene emulsion | 850 | 0.243 | |

The respective disks 10 hours afterward were subjected to the exposure test with the same sunshine weatherometer as used in Example IV-1 . As a result, no change was visually observed in the disk obtained in Example IV-5 even after 500 hours. On the other hand, yellowing was observed in the disk obtained in Comparative Example IV-3 after 200 hours. It is therefore understood that the composition according to the present invention has stable light resistance.

### (Example IV-6 and Comparative Example IV-4)

The ultraviolet-absorbing emulsion obtained in Example IV-2 or the conventional ultraviolet absorber, and an aqueous cationic polyurethane emulsion F-8559D were mixed in formulation amounts (solid content) as shown in Table IV-4. Using the resulting aqueous dispersion, a uniform thin film having a thickness of about 1 µm was formed in the manner as in Example IV-5. The disks were respectively placed in hot water at 70°C, and absorbance of the thin film at 340 nm was measured in every 2 hours. The results obtained are shown in Table IV-4.

**TABLE IV-4**

| | Aqueous resin emulsion composition | Compounding amount | :A0 | Absorbance |
|---|---|---|---|---|
| | | | :A10 | Retention (%) |
| Example IV-6 | IV-UVR-1+F-8559D | 175 | 0.455 | 98.5 |
| | | 825 | 0.448 | |
| Comparative Example IV-4 | Trade name (MBEP]+F-8559D | 100 | 0.413 | 18.4 |
| | | 90 | 0.076 | |

It was confirmed from the results that in the composition of the present invention, the ultraviolet-absorbing emulsion is completely retained in a resin matrix and does not substantially elute (bleedout).

According to aspect IV, the aqueous ultraviolet-absorbing emulsion having stable light resistance at high level over a long period of time, and the emulsion resin composition comprising the aqueous ultraviolet-absorbing resin emulsion and the aqueous resin can be provided.

Examples relating to aspect V are described below. Synthesis of ultraviolet-absorbing resin used in aspect V.

Ultraviolet-absorbing resin (i) was synthesized using the polyester polyols (1) and (2) having an ultraviolet-absorbing group obtained in Synthesis Examples 1 and 2.

### [Ultraviolet-absorbing resin V-i-1]

It is the same resin as the aqueous emulsion of the ultraviolet-absorbing resin (A-1) used in Example I-1 of the Aspect I. Non-volatile content concentration is 40%, and average particle size is 95 nm.

### [Ultraviolet-absorbing resin V-i-2]

It is the same resin as the aqueous emulsion of the ultraviolet-absorbing resin (I-UVR-1) used in Example II-1 of the invention II. Non-volatile content concentration is 40%, and average particle size is 170 nm.

### [Ultraviolet-absorbing resin V-i-3]

It is the same resin as the aqueous emulsion of the ultraviolet-absorbing resin (A-2) used in Example I-2 of the invention I. Non-volatile content concentration is 40%, and average particle size is 82 nm.

### [Ultraviolet-absorbing resin V-i-4]

It is the same resin as the aqueous emulsion of the ultraviolet-absorbing resin (III-UVR-1) used in Example III-1 of the invention III. Non-volatile content concentration is 35%, and average particle size is 90 nm.

### [Ultraviolet-absorbing resin V-i-5]

For the sake of comparison, a commercially available product, Tinuvin 1130 (a product of Ciba Specialty Chemical Co., a mixture of α-[3-[3-(2H-benzotriazol-2-yl)-5-(1.1-dimethyl ethyl)-4-hydroxyphenyl]-1-oxopropyl-ω-hydroxypoly(oxo-1,2-etha nediyl), α-(3-[3-(2H-benzotriazol-2-yl)-5-(1,1-dimethyl ethyl)-4-hydroxyphenyl]-1-oxopropyl]-ω-[3-[3-(2H-benzotriazol-2-yl)-5-(1,1-dimethylethyl)-4-hydroxyphenyl]-1-oxopropyl]poly( oxo-1.2-ethanediyl) and polyethylene glycol 300), was used as an ultraviolet-absorbing resin.

### Ultraviolet-absorbing resin V-i-6:

### [Ultraviolet-absorbing resin V-i-6]

For the sake of comparison, a commercially available product, LX 301 (a product of Asahi Denka Kogyo K.K., forcedly emulsified emulsion by the nonionic emulsifier of 2(2'-hydroxy-3'-t-butyl-5'-methylphenyl)-5-chlorobenzotriazole, non-volatile content concentration: 30%), was used as an ultraviolet-absorbing resin.

### [Aqueous urethane resin (V-iiu)]

The following commercially available products were used as the aqueous urethane resin (V-iiu).

### [Aqueous urethane resin (V-iiu-1)]

Aqueous urethane resin emulsion: Super Flex E-2000 (a product of Dai-ichi Kogyo Seiyaku Co., Ltd., obtained by forcedly emulsifying ether urethane resin with a nonionic emulsifier (emulsifying a resin itself in water with an emulsifier))

### [Aqueous urethane resin (V-iiu-2)]

Aqueous urethane resin emulsion: Ever Fanol AP-12 (a product of Nicca Chemical Co., Ltd. , obtained by forcedly emulsifying ether urethane resin with the nonionic emulsifier (emulsifying a resin in itself in water with an emulsifier))

### [Example V-1]

A blend of 2 parts by weight of the ultraviolet-absorbing resin V-i-1 obtained above and 100 parts by weight of the polyurethane resin V-iiu-1 was used as an aqueous resin composition for coating artificial leather.

### [Examples V-2 to V-10 and Comparative Examples V-1 to V-6]

Blends shown in Table V-1 were used as an aqueous resin composition for coating artificial leather.

Aqueous resin compositions for coating artificial leather, obtained in the Examples and the Comparative Examples were evaluated as follows.

### <Light resistance>

A composition was formed into a film having a film thickness of 100 µm, and the film was dried at 120°C for 30 minutes. The film was subjected to exposure test with a super xenon weatherometer (SX2-750, manufactured by Suga Instrument Co., Ltd.) under conditions of xenon lamp output: 180 W/m², black panel temperature: 63°C, and humidity: 50%, for 1,000 hours. Evaluation was made by comparing a film after testing with a film before testing.
O: No change
X: Tacky feeling (surface degradation)

### <Light resistance under moisture condensation condition>

A composition was formed into a film having a film thickness of 100 µm, and the film was dried at 120°C for 30 minutes. The film was subjected to an exposure test with the above super xenon weather meter under conditions of xenon lamp output: 180 W/m², black panel temperature: 63°C, and humidity: 100%, for 1, 000 hours. Evaluation was made by comparing a film after test with a film before test.
O: No change
X: Tacky feeling (surface degradation)

It is apparent from the above-mentioned results that films prepared from the aqueous resin emulsion composition for coating artificial leather of the invention IV have excellent light resistance, light resistance under moisture condensation condition and adhesive properties, and thus light resistance of a plastic substrate itself is improved, thereby showing excellent durability under practical conditions.

**TABLE V-1**

| | Aqueous emulsion of ultraviolet-absorbing resin | | Aqueous urethane resin emulsion | | Light resistance | |
|---|---|---|---|---|---|---|
| | | | | | | Under moisture condensationcondition |
| | Kind | Parts by weight | Kind | Parts by weight | O | O |
| Example V-1 | V-i-1 | 2 | V-iiu-1 | 100 | O | O |
| Example V-2 | V-i-2 | 2 | V-iiu-1 | 100 | O | O |
| Example V-3 | V-i-3 | 2 | V-iiu-1 | 100 | O | O |
| Example V-4 | V-i-4 | 2 | V-iiu-1 | 100 | O | O |
| Example V-5 | V-i-1 | 2 | V-iiu-2 | 100 | O | O |
| Example V-6 | V-i-2 | 2 | V-iiu-2 | 100 | O | O |
| Example V-7 | V-i-3 | 2 | V-iiu-2 | 100 | O | O |
| Example V-8 | V-i-4 | 2 | V-iiu-2 | 100 | O | O |
| Comparative Example V-1 | V-i-5 | 2 | V-iiu-1 | 100 | O | X |
| Comparative Example V-2 | V-i-6 | 2 | V-iiu-1 | 100 | O | X |
| Comparative Example V-3 | V-i-5 | 2 | V-iiu-2 | 100 | O | X |
| Comparative Example V-4 | V-i-6 | 2 | V-iiu-2 | 100 | O | X |
| Comparative Example V-5 | - | - | V-iiu-1 | 100 | X | X |
| Comparative Example V-6 | - | - | V-iiu-2 | 100 | X | X |

Films prepared from the aqueous resin emulsion composition for coating artificial leather of the invention V have excellent light resistance and excellent light resistance under moisture condensation condition, and therefore can provide artificial leather having excellent light resistance under practical conditions.

Examples relating to the invention VI are described below.

### Ultraviolet-absorbing resin

As the ultraviolet-absorbing resin (i), the ultraviolet-absorbing resins V-i-1 to V-i-6 used in the above invention V were used as VI-i-1 to VI-i-6, respectively.

### [Acrylic resin and/or urethane resin (VI-ii)]

The following commercially available products were used as the acrylic resin and/or urethane resin (VI-ii).

### [Aqueous polyurethane resin VI-iiu]

Aqueous polyurethane emulsion: Solucote25 191 (a product of Soluol Co., Inc, polytetramethylene glycol type polyurethane dispersion, non-volatile content concentration: 40%)

### [Aqueous acrylic resin VI-iia]

Aqueous acrylic emulsion: Primal WL-96 (a product of Rohm & Haas Co., acrylic emulsion, non-volatile content concentration: 42%)

### [Example VI-1]

A blend of 2 parts by weight of the ultraviolet-absorbing resin VI-I-1 obtained above and 100 parts by weight of the polyurethane resin VI-ii-u was used as a resin composition for coating plastic.

### [Examples VI-2 to VI-10 and Comparative Examples VI-1 to VI-6]

Each of blends shown in Table VI-1 was used as a resin composition for coating a plastic.

Resin compositions for coating a plastic obtained in the Examples and the Comparative Examples were evaluated as follows.

### <Light resistance>

A composition was applied to a polystyrene substrate having a width of 7 cm, a length of 15 cm and a thickness of 0.2 cm to have a film thickness of 70 µm, followed by drying at 80°C for 30 minutes, thereby obtaining a test plate. The test plate was subjected to exposure test with the super xenon weatherometer (SX2-750, manufactured by Suga Instrument Co., Ltd.) under conditions of xenon lamp output: 180 W/m², black panel temperature: 63°C, and humidity: 50%, for 1, 000 hours. Evaluation was made by comparing a test plate after testing with a test plate before testing.
O: No change
Δ: Slightly tacky feeling (partial surface degradation)
X: Tacky feeling (surface degradation)

### <Light resistance under moisture condensation condition>

A composition was applied onto a polystyrene substrate having a width of 7 cm, a length of 15 cm and a thickness of 0.2 cm to have a film thickness of 70 µm, followed by drying at 80°C for 30 minutes, thereby obtaining a test plate. The test plate was subj ected to exposure test with the super xenon weatherometer (SX2-750, manufactured by Suga Instrument Co. , Ltd.) under conditions of xenon lamp output: 180 W/m², black panel temperature: 63°C, and humidity: 100%, for 1,000 hours. Evaluation was made by comparing a test plate after testing with a test plate before testing.
O**:** No change
Δ: Slightly tacky feeling (partial surface degradation)
X: Tacky feeling (surface degradation)

### <Initial adhesion>

The same test plate as used in the light resistance test was prepared. The coating film surface was cut with a cutter at a distance of 1 mm to form cross-hatched squares of 10 x 10 mm. A cellophane tape was adhered on the cross-hatched squares and the tape was peeled off at one stroke. Adhesion was evaluated by the number of unpeeled squares.
100/100: Peeling 0%
50/100: Peeling 50%
0/100: Entire peeling

### <Adhesion after light resistance test under moisture condensation condition> (abbreviated as "after moisture condensation-light resistance test" in Table VI-1)

The same test plate as used in the light resistance test was prepared. After the light resistance test under moisture condensation condition, the coating film surface was cut with a cutter at a distance of 1 mm to form cross-hatched squares of 10 x 10 mm. A cellophane tape was adhered on the cross-hatched squares and the tape was peeled off at one stroke. Adhesive properties were evaluated by the number of unpeeled squares.
100/100: Peeling 0%
50/100 : Peeling 50%
0/100 : Entire peeling

### <Appearance of substrate itself after light resistance test under moisture condensation condition> (abbreviated as "after moisture condensation-light resistance test" in Table VI-1)

After the light resistance test under moisture condensation condition, appearance at a substrate side of an interfacial portion between a coating film and a substrate was evaluated by the state of roughness of the substrate.
O: No change
X: Deterioration (rough surface)

The results of each test are shown in Table VI-1 below.

It is apparent from the results that test plates coated with the resin composition for coating plastic of the invention VI have excellent light resistance, excellent light resistance under moisture condensation condition and excellent adhesive properties, and thus light resistance of a plastic substrate itself is improved, thereby showing excellent durability under practical conditions.

**TABLE VI-1**

| | Aqueous emulsion of ultraviolet-absorbing resin | | Aqueous emulsion of acryl-urethane resin | | Light resistance | | Adhesive properties | | Appearance |
|---|---|---|---|---|---|---|---|---|---|
| | Kind | Parts by weight | Kind | Parts by weight | | Under moisture condensation condition | Initial | After moisture condensation-light resistance test | After moisture condensation-light resistance test |
| Example VI-1 | VI-i-1 | 2 | VI-iiu | 100 | O | O | 100/100 | 99/100 | O |
| Example VI-2 | VI-i-2 | 2 | VI-iiu | 100 | O | O | 99/100 | 97/100 | O |
| Example VI-3 | VI-i-3 | 2 | VI-iiu | 100 | O | O | 99/100 | 99/100 | O |
| Example VI-4 | VI-i-4 | 2 | VI-iiu | 100 | O | O | 98/100 | 96/100 | O |
| Example VI-5 | VI-i-1 | 2 | VI-iia | 100 | O | O | 99/100 | 95/100 | O |
| Example VI-6 | VI-i-2 | 2 | Vi-iia | 100 | O | O | 98/100 | 97/100 | O |
| Example VI-7 | VI-i-3 | 2 | VI-iia | 100 | O | O | 97/100 | 96/100 | O |
| Example VI-6 | VI-i-4 | 2 | VI-iia | 100 | O | O | 96/100 | 94/100 | O |
| Comparative Example VI-1 | VI-i-5 | 2 | VI-iiu | 100 | O | X | 93/100 | 32/100 | X |
| Comparative Example VI-2 | VI-i-6 | 2 | VI-iiu | 100 | O | X | 90/100 | 34/100 | X |
| Comparative Example VI-3 | VI-i-5 | 2 | VI-iia | 100 | O | Δ | 93/100 | 45/100 | X |
| Comparative Example VI-4 | VI-i-6 | 2 | VI-iia | 100 | O | Δ | 91/100 | 49/100 | X |
| Comparative Example VI-5 | - | - | VI-iiu | 100 | X | X | 91/100 | 30/100 | X |
| Comparative Example VI-6 | - | - | VI-iia | 100 | Δ | Δ | 95/100 | 40/100 | X |

By coating plastics wi th the aqueous resin emulsion for coating a plastic of the invention VI, light resistance of the substrate itself is improved, and a coating film having excellent durability (adhesive properties, light resistance) is obtained.

Examples relating to the invention VII are shown below.

As the ultraviolet-absorbing resin (i), the ultraviolet-absorbing resins V-i-1 to V-i-6 used in the above invention V were used as VII-i-1 to VII-i-6, respectively.

The following commercially available products were used as the acrylic resin and/or urethane resin (VII-ii).

### [Aqueous polyurethane resin VII-iiu]

Aqueous polyurethane emulsion: Solucote25 191 (a product of Soluol Co., Inc, polytetramethylene glycol type polyurethane dispersion, non-volatile content concentration: 40%)

### [Aqueous acrylic resin VII-iia]

Aqueous acrylic emulsion: Primal WL-96 (a product of Rohm & Haas Co., acrylic emulsion, non-volatile content concentration: 42%)

### [Example VII-1]

A blend of 2 parts by weight of the ultraviolet-absorbing resin VII-i-1 obtained above and 100 parts by weight of the polyurethane resin VII-iiu was used as a resin composition for coating woody material.

### [Examples VII-2 to VII-10 and Comparative Examples VII-1 to VII-6]

Each of blends shown in Table VII-1 was used as a resin composition for coating woody material.

Resin compositions for coating woody material obtained in the Examples and the Comparative Examples were evaluated as follows.

The results of each test are shown in Table VII-1.

**TABLE VII-1**

| | Aqueous emulsion of ultraviolet-absorbing resin | | Aqueous emulsion of acryl-urethane resin | | Yellowing on Japanese oak plate surface after light resistance test | |
|---|---|---|---|---|---|---|
| | Kind | Parts by weight | Kind | Parts by weight | | Under moisture condensation condition |
| Example VII-1 | VII-i-1 | 2 | VII-iiu | 100 | O | O |
| Example VII-2 | VII-i-2 | 2 | VII-iiu | 100 | O | O |
| Example VII-3 | VII-i-3 | 2 | VII-iiu | 100 | O | O |
| Example VII-4 | VII-i-4 | 2 | VII-iiu | 100 | O | O |
| Example VII-5 | VII-i-1 | 2 | VII-iia | 100 | O | O |
| Example VII-6 | VII-i-2 | 2 | VII-iia | 100 | O | O |
| Example VII-7 | VII-i-3 | 2 | VII-iia | 100 | O | O |
| Example VII-8 | VII-i-4 | 2 | VII-iia | 100 | O | O |
| Comparative Example VII-1 | VII-i-5 | 2 | VII-iiu | 100 | O | X |
| Comparative Example VII-2 | VII-i-6 | 2 | VII-iiu | 100 | O | X |
| Comparative Example VII-3 | VII-i-5 | 2 | VII-iia | 100 | O | X |
| Comparative Example VII-4 | VII-i-6 | 2 | VII-iia | 100 | O | X |
| Comparative Example VII-5 | - | - | VII-iiu | 100 | X | X |
| Comparative Example VII-6 | - | - | VII-iia | 100 | X | X |

### <Light resistance>

A composition was applied onto a Japanese oak plate having a width of 7 cm, a length of 15 cm and a thickness of 1 cm to have a film thickness of 70 µm. The coated plate was allowed to stand for 1 day at room temperature, and then dried at 50°C for 30 minutes, thereby obtaining a test plate. The test plate was subjected to the exposure test with the super xenon weatherometer (SX 2-750, manufactured by Suga Instrument Co., Ltd.) under conditions of xenon lamp output: 180 W/m², black panel temperature: 63°C, and humidity: 50%, for 1,000 hours. Yellowing of the woody material surface was evaluated by comparing a test plate after testing with a test plate before testing.
O No yellowing
X: Yellowing was observed

### <Light resistance under moisture condensation condition>

A composition was applied onto a Japanese oak plate having a width of 7 cm, a length of 15 cm and a thickness of 1 cm to have a film thickness of 70 µm. The coated plate was allowed to stand for 1 day at room temperature, and then dried at 50°C for 30 minutes, thereby obtaining a test plate. The test plate was subjected to the exposure test with the super xenon weatherometer (SX2-750, manufactured by Suga Instrument Co., Ltd.) under conditions of xenon lamp output: 180 W/m², black panel temperature: 63°C, and humidity: 100%, for 1, 000 hours. Evaluation was made by comparing a test plate after test with a test plate before test.
O: No yellowing
X: Yellowing was observed

It is apparent from the examples that the test plates coated with the resin composition for coating woody material of the invention VI have excellent light resistance, excellent light resistance under moisture condensation condition and excellent adhesive properties, and thus light resistance of a plastic substrate itself is improved, thereby showing excellent durability under practical conditions.

By coating woody materials with the aqueous resin emulsion for coating woody material of the invention VII, discoloration of woody material due to rawmaterial yellowing cangreatlybe decreased.

## Claims

1. An ultraviolet-absorbing resin (1) obtainable by reacting :
- a polyester polyol (A) having an ultraviolet-absorbing group, represented by the following formula: 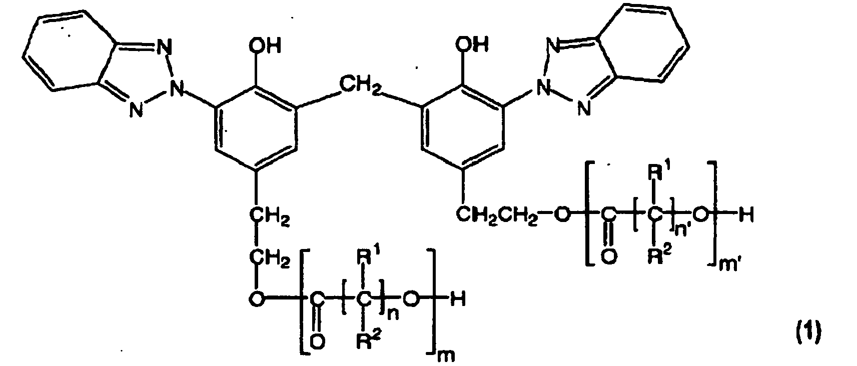 in which
R¹ and R² each represent a hydrogen atom or an alkyl group having 1 to 10 carbon atoms,
n and n' each are an integer of 4 to 8,
m and m' each are an integer of 1 to 20,
R¹ and R² each are the same or different,
n and n' structural units are the same or different, and
m and m' structural units are the same or different);
- a compound (C) containing an ionic and/or nonionic surface active groups said compound (C) being at least one member selected from the group consisting of the following macromonomers (C3) and (C4):
a macromonomer (C3) having a tertiary and/or quaternary nitrogen atom at a side chain and having at least two hydroxyl groups at the terminals, and
a macromonomer (C4) obtainable by radically polymerizing radical polymerizable unsaturated monomers containing a nonionic surface active group in the presence of a mercaptan chain transfer agent having two or more hydroxyl groups and one mercapto group and
- an organic polyisocyanate (D).

2. An ultraviolet-absorbing resin (i) according to claim 1, which is obtainable by reacting
the polyester polyol (A),
the compound (C),
the organic polyisocyanate (D) and,
a polyol (B)

3. An ultraviolet-absorbing resin (i) according to claim 1 or 2, wherein the reaction is conducted in the presence of an organic solvent (s).

4. An ultraviolet-absorbing resin (i) according to any one of claims 1 to 3, wherein the polyester polyol (A) is contained in the ultraviolet-absorbing resin (i) in an amount of 10% by weight or more.

5. An aqueous ultraviolet-absorbing resin emulsion (ie) obtainable by neutralizing a solution of an organic solvent (s) containing the ultraviolet-absorbing resin (i) according to any one of claims 1 to 4, and then dispersing the same in water.

6. An aqueous ultraviolet-absorbing resin emulsion (ie) according to claim 5, wherein neutralization of the solution is conducted with a neutralizing agent.

7. An aqueous ultraviolet-absorbing resin emulsion (ie) according to claim 5 or 6, which is obtainable by removing the organic solvent (s).

8. A resin composition comprising the ultraviolet-absorbing resin (i) according to any one of claims 1 to 4 and an other resin (ii).

9. A resin composition according to claim 8, wherein the other resin (ii) is an acrylic resin (iia) and/or an urethane resin (iiu).

10. An aqueous resin emulsion composition comprising :
- at least one member selected from the group consisting of an ultraviolet-absorbing resin (i) according to any one of claims 1 to 4 and an aqueous ultraviolet-absorbing resin emulsion (ie) according to any one of claims 5 to 7, and
- an aqueous emulsion (iie) of an other resin (ii).

11. An aqueous resin emulsion composition according to claim 10, which comprises an aqueous ultraviolet-absorbing resin emulsion (ie) and an aqueous emulsion (ile) of an other resin (II).

12. Use of a resin composition according to claim 8 or 9, for coating artificial leather, plastics or woody material.

13. Use of an aqueous resin emulsion composition according to claims 10 or 11, for coating artificial leather, plastics or woody material.

## Patentansprüche

1. UV-absorbierendes Harz (i), erhältlich durch Reagieren:
- eines Polyesterpolyols (A) mit einer UV-absorbierenden Gruppe, dargestellt durch die folgende Formel: 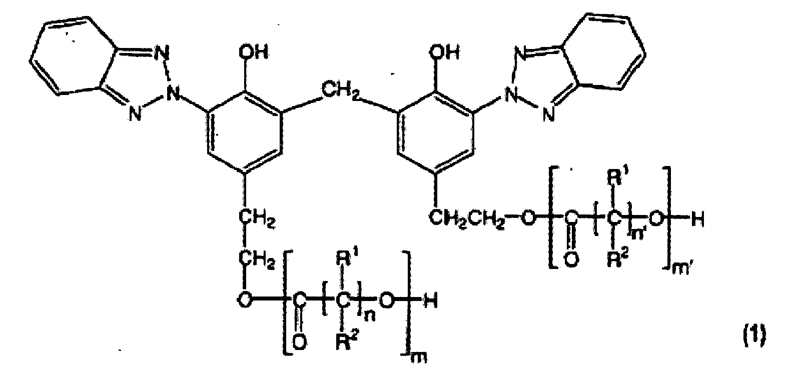 in welcher
R¹ und R² je ein Wasserstoffatom oder eine Alkylgruppe mit 1 bis 10 Kohlenstoffatomen darstellen,
n und n' je eine ganze Zahl von 4 bis 8 sind,
m und m' je eine ganze Zahl von 1 bis 20 sind,
R¹ und R² je dieselben oder verschieden sind,
n und n' Struktureinheiten dieselben oder verschieden sind, und
m und m' Struktureinheiten dieselben oder verschieden sind;
- einer Verbindung (C), die eine ionische und/oder nicht-ionische oberflächenaktive Gruppe enthält, wobei die Verbindung (C) wenigstens ein Mitglied ist, gewählt aus der Gruppe, die besteht aus den folgenden Makromonomeren (C3) und (C4):
eines Makromonomers (C3) mit einem tertiären und/oder quaternären Stickstoffatom an einer Seitenkette und mit wenigstens zwei Hydroxylgruppen an den Enden,und
eines Makromonomers (C4), erhältlich durch Radikalpolymerisation von radikalpolymerisierbaren ungesättigten Monomeren, enthaltend eine nicht-ionische oberflächenaktive Gruppe, in Gegenwart eines Mercaptankettenüberführungsmittels mit zwei oder mehr Hydroxylgruppen und einer Mercaptogruppe und
- eines organischen Polyisocyanats (D).

2. UV-absorbierendes Harz (i) nach Anspruch 1, welches erhältlich ist durch Reagieren
des Polyesterpolyols (A),
der Verbindung (C),
des organischen Polyisocyanats (D), und
eines Polyols (B).

3. UV-absorbierendes Harz (i) nach Anspruch 1 oder 2, wobei die Reaktion in Gegenwart eines organischen Lösungsmittels (s) ausgeführt wird.

4. UV-absorbierendes Harz (i) nach einem der Ansprüche 1 bis 3, wobei das Polyesterpolyol (A) enthalten ist in dem UV-absorbierenden Harz (i) in einer Menge von 10 Gew.-% oder mehr.

5. Wäßrige UV-absorbierende Harzemulsion (ie), erhältlich durch Neutralisieren einer Lösung eines organischen Lösungsmittels (s), das das UV-absorbierende Harz (i) gemäß einem der Ansprüche 1 bis 4 enthält, und dann Dispergieren derselben in Wasser.

6. Wäßrige UV-absorbierende Harzemulsion (ie) nach Anspruch 5, wobei Neutralisieren der Lösung mit einem Neutralisiermittel ausgeführt wird.

7. Wäßrige UV-absorbierende Harzemulsion (ie) nach Anspruch 5 oder 6, welche erhältlich ist durch Entfernen des organischen Lösungsmittels (s).

8. Harzzusammensetzung, umfassend das UV-absorbierende Harz (i) nach einem der Ansprüche 1 bis 4 und ein anderes Harz (ii).

9. Harzzusammensetzung nach Anspruch 8, wobei das andere Harz (ii) ein Acrylharz (iia) und/oder ein Urethanharz (iiu) ist.

10. Wäßrige Harzemulsionszusammensetzung, umfassend:
- wenigstens ein Mitglied, das gewählt ist aus der Gruppe, die besteht aus einem UV-absorbierenden Harz (i) nach einem der Ansprüche 1 bis 4 und einer wäßrigen UV-absorbierenden Harzemulsion (ie) nach einem der Ansprüche 5 bis 7, und
- eine wäßrige Emulsion (iie) von einem anderen Harz (ii).

11. Wäßrige Harzemulsionszusammensetzung nach Anspruch 10, welche eine wäßrige UV-absorbierende Harzemulsion (ie) und eine wäßrige Emulsion (iie) eines anderen Harzes (ii) umfaßt.

12. Verwendung einer Harzzusammensetzung nach Anspruch 8 oder 9 zur Beschichtung von Kunstleder, Plastik oder Holzmaterial.

13. Verwendung einer wäßrigen Harzemulsionszusammensetzung nach Anspruch 10 oder 11 zur Beschichtung von Kunstleder, Plastik oder Holzmaterial.

## Revendications

1. Résine (i) absorbant le rayonnement ultraviolet, obtenue par réaction :
- d'un polyester polyol (A), qui a un groupe absorbant le rayonnement ultraviolet, représenté par la formule suivante : 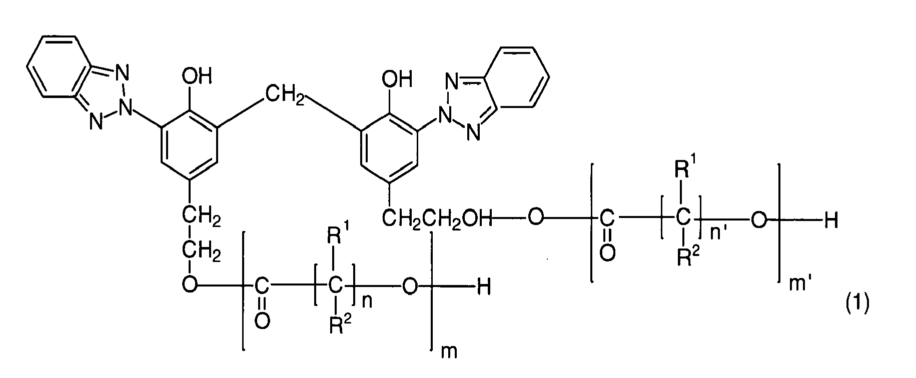 dans laquelle
R¹ et R² représentent chacun un atome d'hydrogène ou un groupe alkyle ayant de 1 à 10 atomes de carbone,
n et n' sont chacun un nombre entier de 4 à 8,
m et m' sont chacun un nombre entier de 1 à 20,
R¹ et R² sont chacun identiques ou différents,
les unités structurales n et n' sont identiques ou différentes, et
les unités structurales m et m' sont identiques ou différentes ;
- d'un composé (C) contenant un groupe tensioactif ionique et/ou non ionique, ledit composé (C) étant au moins un composé choisi dans le groupe comprenant les macromonomères (C3) et (C4) suivants :
un macromonomère (C3) qui a un atome d'azote tertiaire et/ou quaternaire sur une chaîne latérale et qui a au moins deux groupes hydroxyle aux extrémités, et
un macromonomère (C4) susceptible d'être obtenu par polymérisation radicalaire de monomères insaturés, polymérisables par voie radicalaire, contenant un groupe tensioactif non ionique en présence d'un agent de transfert de chaîne qui a deux groupes hydroxyle ou plus et un groupe mercapto, et
- d'un polyisocyanate organique (D).

2. Résine (i) absorbant le rayonnement ultraviolet, selon la revendication 1, qui est obtenue par réaction
du polyester polyol (A)
du composé (C)
du polyisocyanate organique (D) et,
d'un polyol (B).

3. Résine (i) absorbant le rayonnement ultraviolet, selon la revendication 1 ou 2, **caractérisée en ce que** la réaction est effectuée en présence d'un solvant organique (s).

4. Résine (i) absorbant le rayonnement ultraviolet, selon l'une quelconque des revendications 1 à 3, **caractérisée en ce que** le polyester polyol (A) est contenu dans la résine (i) absorbant le rayonnement ultraviolet, en une quantité en poids de 10 % ou plus.

5. Emulsion aqueuse de résine (ie) absorbant le rayonnement ultraviolet, obtenue en neutralisant une solution d'un solvant organique (s) qui contient la résine (i) absorbant le rayonnement ultraviolet, selon l'une quelconque des revendications 1 à 4, et puis dispersion de celle-ci dans l'eau.

6. Emulsion aqueuse de résine (ie) absorbant le rayonnement ultraviolet, selon la revendication 5, **caractérisée en ce que** la neutralisation de la solution est effectuée avec un agent de neutralisation.

7. Emulsion aqueuse de résine (ie) absorbant le rayonnement ultraviolet selon la revendication 5 ou 6, **caractérisée en ce qu'**elle est susceptible d'être obtenue par l'élimination du solvant organique (s).

8. Composition de résine comprenant la résine (i) absorbant le rayonnement ultraviolet, selon l'une quelconque des revendications 1 à 4 et une autre résine (ii).

9. Composition de résine selon la revendication 8, **caractérisée en ce que** l'autre résine (ii) est une résine acrylique (iia) et/ou une résine uréthane (iiu).

10. Composition d'émulsion aqueuse de résine comprenant :
- au moins un composant choisi dans le groupe constitué d'une résine (i) absorbant le rayonnement ultraviolet selon l'une des revendications 1 à 4 et d'une émulsion aqueuse de résine (ie) absorbant le rayonnement ultraviolet, selon l'une quelconque des revendications 5 à 7 et
- une émulsion aqueuse (iie) d'une autre résine (ii).

11. Composition d'émulsion aqueuse de résine selon la revendication 10, qui comprend une émulsion aqueuse de résine (ie) absorbant le rayonnement ultraviolet et une émulsion aqueuse (iie) d'une autre résine (ii).

12. Utilisation de la composition de résine, selon la revendication 8 ou 9, pour le revêtement du cuir artificiel, des plastiques ou d'un matériau à base de bois.

13. Utilisation de la composition de résine, selon les revendication 10 ou 11, pour le revêtement du cuir artificiel, des plastiques ou d'un matériau à base de bois.
